# FASCICULE DE BREVET EUROPEEN

(11) **EP 3 673 120 B1**
(45) Date de publication et mention de la délivrance du brevet: **25.05.2022**
(21) Numéro de dépôt: 18759915.4
(22) Date de dépôt: 21.08.2018
(51) Int. Cl.: E04B 1/14, E04B 1/61, E04B 2/08, E04C 2/284, F16B 2/14

(54) **SYSTÈME DE CONSTRUCTION AVEC ELEMENTS DE CONSTRUCTION ASSEMBLABLES A L'AIDE DE RAINURES ET LANGUETTES**
KONSTRUKTIONSSYSTEM MIT KONSTRUKTIONSELEMENTEN, DIE MITHILFE VON NUTEN UND FEDERN MONTIERT WERDEN KÖNNEN
CONSTRUCTION SYSTEM WITH CONSTRUCTION ELEMENTS THAT CAN BE ASSEMBLED BY MEANS OF TONGUES AND GROOVES

(30) Priorité: 22.08.2017 LU 100372; 23.11.2017 LU 100520; 03.07.2018 LU 100848
(43) Date de publication de la demande: 01.07.2020
(73) Titulaire: Solarafi, 6180 Gonderange (LU)
(72) Inventeur: MATTIOLI, Raymond, 6180 Gonderange (LU)
(74) Mandataire: Bruck, Mathis
(86) Numéro de dépôt international: PCT/EP2018/072530
(87) Numéro de publication internationale: WO 2019/038268

(56) Documents cités:
- WO-A1-2006/104436
- FR-A- 1 518 263
- US-A1- 2007 028 547
- US-A1- 2014 230 357

## Description

### Domaine Technique

De manière générale, l'invention concerne un système de construction avec éléments de construction assemblables à l'aide de rainures et languettes. Elle concerne plus particulièrement un système de construction pour murs, cloisons, façades, dalles ou structures portantes et constructions similaires, dans lequel un premier élément de construction a une surface de jointement équipée d'une languette et un deuxième élément de construction a une surface de jointement équipée d'une rainure, la languette étant emboîtable avec jeu dans la rainure, lorsque les deux éléments de construction sont assemblés pour former un joint au niveau desdites surfaces de jointement.

### Arrière-plan technologique

Des systèmes de construction avec éléments assemblables à l'aide de languettes emboitables dans des rainures sont connus depuis longtemps. De tels systèmes ont notamment l'avantage de permettre la réalisation des constructions sans mortier ou colle entre les surfaces de jointement, constructions qui se laissent dès lors facilement démonter, offrant notamment la possibilité de pouvoir réutiliser les différents éléments de construction.

Afin de pouvoir réaliser un assemblage solide et précis et, le cas échéant, avec des joints suffisamment étanche à l'air, il faut un emboitement précis de la languette dans la rainure, c'est-à-dire la languette ne peut avoir qu'un faible jeu dans sa rainure. Or, lors de l'assemblage, un faible jeu de la languette dans sa rainure peut causer des problèmes, notamment si les éléments à assembler présentent des surfaces assez rugueuses. Encore faut-il noter que beaucoup de matériaux de constructions alternatifs, tels que des éco-matériaux, ne permettent pas toujours de fabriquer des éléments de construction équipés de rainures et languettes avec les tolérances requises pour garantir un emboitement des languettes dans les rainures avec faible jeu.

Le document US 2,732,706 A décrit un système de construction dans lequel des blocs de construction assemblées à l'aide de languettes et rainures sont, de façon additionnelle, verrouillés à l'aide de clés ou cales de blocage enfoncées dans des gorges juxtaposées qui sont aménagées dans une surface latérale de la languette et une surface latérale de la rainure. Ces clés ou cales de blocage ont une section rectangulaire pleine ou en forme de « U » et sont chassées dans des gorges de section rectangulaire dont elles épousent la forme. Pour améliorer l'étanchéité à l'air des joints entre les blocs, le document propose d'agencer sur une surface de jointement des saillies de faible hauteur qui pénètrent, lors de l'assemblage des blocs, dans des rainures complémentaires d'une surface de jointement juxtaposée. Cependant, de telles saillies ne sont pas faciles à réaliser et sont facilement endommagés. De surcroît, si lors de l'assemblage, l'on veut avoir une pénétration sans problèmes des saillies dans les rainures complémentaires, il faut travailler avec des jeux assez importants, ce qui réduit naturellement l'efficacité de cette solution pour améliorer l'étanchéité à l'air des joints.

Le document DE 811619 A décrit un système de construction dans lequel des blocs de construction assemblés à l'aide de languettes et rainures sont verrouillés à l'aide de chevilles élastiques horizontales et verticales. Le but de ces chevilles élastiques est d'influencer le comportement oscillatoire d'un bâtiment. Le document FR 1.518.263 A décrit un procédé d'assemblage d'éléments profilés à l'aide de profilés de verrouillage et rainures ayant une section en queue d'aronde. Le document DE 203 04 761 U1 décrit un système d'assemblage de plaques ou panneaux de construction, plus particulièrement des panneaux de sol, à l'aide d'inserts équipés de lèvres élastiques. Aucun de ces documents n'adresse le problème de l'étanchéité à l'air des joints dans des assemblages d'éléments de construction à l'aide de languettes et rainures.

Le document WO 2006/104436 A1 décrit un système de construction pour dalles avec languette et rainure emboîtables avec jeu dans la rainure, et comprenant en outre une clavette enfoncée entre une première surface latérale de la languette et une première surface latérale de la rainure, qui fait face à ladite première surface latérale de la languette. L'élément de construction forme un bloc de construction en forme de parallélépipède rectangle avec quatre surfaces de jointement, dont deux surfaces de jointement adjacentes sont équipées de languettes et deux surfaces de jointement adjacentes sont équipées de rainures. Le bloc de construction a un volume composé de deux parallélépipèdes rectangles.

### Problème technique

Un problème à la base de la présente invention consiste par conséquent à concevoir un système de construction avec éléments de construction assemblables à l'aide de rainures et languettes, ce système devant permettre de réaliser des assemblages solides avec des joints relativement étanches à l'air, tout en garantissant, grâce à des jeux suffisants au niveau des emboitements languettes-rainures, un assemblage sans problème de ces éléments de construction.

### Description générale de l'invention

Selon un premier aspect de l'invention, cet objectif est atteint par un système de construction pour murs, dalles et éléments porteurs ayant les caractéristiques de la revendication 1.

En d'autres termes, en en enfonçant la clavette d'un côté dans le joint latéral entre la languette et la rainure, l'on crée une adhérence par pression entre lesdites surfaces de jointement qui remplace efficacement une colle ou un mortier d'assemblage. L'on appréciera que dans ce type d'assemblage, l'ampleur du jeu de la clavette et dans sa rainure n'affecte plus guère la solidité et l'étanchéité à l'air de l'assemblage. En effet, la solidité et l'étanchéité de l'assemblage sont principalement garanties en générant à l'aide de la clavette une adhérence par pression entre les surfaces de jointement. Il sera aussi noté que les assemblages réalisés avec le système de construction proposé sont facilement démontables, et les éléments de constructions désassemblés peuvent alors être réutilisés pour de nouvelles constructions.

Pour générer l'adhérence par pression entre les surfaces de jointement, la clavette prend avantageusement appui, en direction de la hauteur de la clavette, sur une surface de contre-appui sur ou dans ladite première surface latérale de la languette et sur une surface de contre-appui sur ou dans ladite première surface latérale de la rainure. La pression d'adhérence peut alors être générée par un effet de coin et/ou de précontrainte élastique.

Il sera noté que, contrairement aux systèmes de construction de l'état de la technique, dans lesquels une clé insérée avec jeu n'introduit pas de forces dans l'assemblage, voire une clé, qui occupe l'entièreté de l'espace délimité par des rainures complémentaires, induit des forces dans l'assemblage qui agissent dans toutes directions, dans un système selon l'invention, la clavette induit des forces qui agissent en majeure partie dans une direction privilégiée, qui est choisie plus particulièrement de façon à ce que la surface de jointement dudit premier élément de construction soit poussée, en direction de la hauteur de la languette, fermement contre la surface de jointement dudit deuxième élément de construction.

Le système proposé peut en outre comprendre une clavette qui, lorsqu'elle est enfoncée entre ladite première surface latérale de la languette et ladite première surface latérale de la rainure, qui fait face à ladite première surface latérale de la languette, pousse avantageusement une deuxième surface latérale de la languette fermement contre une deuxième surface latérale de la rainure.

La clavette a avantageusement une pointe biseautée au moins dans le sens de son épaisseur (pointe en forme de coin), voire une pointe biseautée dans le sens de son épaisseur et de sa largeur (pointe en forme de double coin).

La clavette peut par exemple être réalisée en un matériau métallique, tel qu'un acier galvanisé ou l'acier inoxydable, en un matériau synthétique rigide et résistant, tel que l'ABS (acrylonitrile butadiène styrène) ou un matériau synthétique renforcé à l'aide de fibres, ou en bois. La clavette peut aussi être un corps composite, dont certaines parties (notamment les parties les plus sollicitées lors de l'enfoncement de la la clavette, comme par exemple la pointe avant en forme de coin ou de double coin et/ou des arrêtes tranchantes et/ou la partie arrière sur laquelle l'on frappe avec un marteau) sont réalisées en matériau métallique ou revêtues d'un tel matériau métallique, et les parties moins sollicitées sont réalisées en bois ou en une matière synthétique.

Afin de réduire le risque de casser languette lors de l'enfoncement de la clavette, il est préférable que la languette ait une épaisseur de qui représente entre 10% et 40% de l'épaisseur du bloc de construction.

Le jeu latéral de la languette dans la rainure, qui est défini comme étant la différence entre la largeur de la rainure et l'épaisseur de la languette, est de préférence entre 1 mm et 25 mm, plus préférentiellement entre 2 mm et 10 mm. Ce jeu sera plus élevé en cas d'utilisation d'une clavette d'épaisseur plus grande, notamment d'une clavette formée de deux demi-clavettes assemblées à l'aide de ressorts et équipée d'arrêtés tranchantes qui s'incrustent dans la première surface latérale de la languette et de la première surface latérale de la rainure. Si la clavette est cependant reçue dans des encoches agencées dans la première surface latérale de la languette, respectivement dans la première surface de de la de la rainure, ce jeu peut être réduit à une valeur entre 1 mm et 10 mm, où un jeu plus faible est choisi en cas d'élément de construction fabriqué d'un matériau lisse, permettant de bien respecter des tolérances de fabrication assez étroites, et un jeu plus grand est choisi en cas d'élément de construction fabriqué d'un matériau plus rugueux, permettant de moins bien respecter des tolérances de fabrication étroites. Bien entendu, le choix du jeu latéral de la languette dans la rainure sera aussi fonction des dimensions des éléments de construction à assembler et des dimensions de la languette et de la rainure.

Les éléments de construction comprennent, selon l'invention, un bloc de construction dont la forme est décrite comme étant un volume composé de deux parallélépipèdes rectangles extérieurs et d'un parallélépipède rectangle médian inséré entre les deux parallélépipèdes rectangles extérieurs. Le parallélépipède rectangle médian dépasse sur deux surfaces de jointement adjacentes du bloc de construction pour former deux languettes. Les deux parallélépipèdes rectangles extérieurs dépassant sur deux autres surfaces de jointement adjacentes du bloc de construction pour former entre elles deux rainures.

Un tel bloc peut être un bloc monolithe formé d'un seul matériau ou un bloc composite, en particulier un bloc dans lequel les deux parallélépipèdes rectangles extérieurs sont formés d'un autre matériau que le parallélépipède rectangle médian. Ainsi les deux parallélépipèdes rectangles extérieurs peuvent par exemple être formés d'un matériau plus dur et le parallélépipède rectangle médian peut être formé d'un matériau meilleur isolant.

Les clavettes sont avantageusement agencées selon deux directions perpendiculaires. Dans un mur ou une cloison, des clavettes sont avantageusement agencées selon une direction horizontale et selon une direction verticale. Les clavettes verticales créent ainsi une adhérence par pression entre des blocs successifs d'une seule rangée de blocs, et les clavettes horizontales créent une adhérence par pression entre des blocs superposés de deux rangées successives.

Dans une cloison ou un mur construit avec le système, il est préférable d'agencer toutes les clavettes d'un seul côté du plan médian de la cloison, respectivement du mur. Ainsi, ces clavettes répartissent le jeu d'un seul côté de ce plan médian, et les surfaces de parement des blocs de construction assemblés sont de chaque côté du mur ou de la cloison sensiblement coplanaires.

La première surface latérale de la languette et la première surface latérale de la rainure, peuvent comprendre des encoches juxtaposées servant de logement à une clavette.

Une exécution préférée du système comprend une clavette à double effet qui est conçue de façon à produire, lors de l'enfoncement de la clavette double effet entre ladite première surface latérale de la languette et ladite première surface latérale de la rainure, les deux effets suivants :
i) à pousser la languette avec sa deuxième surface latérale fermement contre la deuxième surface latérale de la rainure, qui fait face à ladite deuxième surface latérale de la languette ; et
ii) à pousser davantage la languette dans la rainure et/ou à pousser la surface de jointement équipée de la languette fermement contre la surface de jointement équipée de la rainure dans laquelle ladite languette s'emboite.

Il sera apprécié qu'une telle clavette à double effet ne permet pas seulement de créer une adhésion par pression entre la surface de jointement équipée de la languette et la surface de jointement équipée de la rainure dans laquelle la languette s'emboite, ceci à condition que la hauteur de la languette soit inférieure à la profondeur de la rainure, mais aussi une adhésion par pression entre la deuxième surface latérale de la languette et la deuxième surface latérale de la rainure.

Une telle clavette à double effet comprend avantageusement :
d'un côté latéral, une première surface latérale d'appui prenant appui, en direction de la hauteur de la languette, sur une surface de contre-appui sur ladite première surface latérale de la languette ; et
de l'autre côté latéral, une deuxième surface latérale d'appui prenant appui, en direction de la hauteur de la languette, sur une surface de contre-appui sur ladite première surface latérale de la rainure ;
ladite première surface latérale d'appui de la clavette et ladite deuxième surface latérale d'appui de la clavette définissant entre elles un angle aigue, de façon à ce que la clavette pousse la languette dans la rainure, lorsqu'elle est enfoncée entre ladite première surface latérale de la languette et ladite première surface latérale de la rainure.

Dans une exécution préférée, la clavette est composée de deux demi-clavettes sensiblement identiques agencées dos-à-dos avec un léger désaxage axial entre elles, de façon à ce qu'une des deux demi-clavettes forme la première surface latérale d'appui qui prend appui sur la surface de contre-appui sur ladite première surface latérale de la languette, et l'autre des deux demi-clavettes forme la deuxième surface latérale d'appui qui prend appui sur la surface de contre-appui sur ladite première surface latérale de la rainure.

Dans une exécution préférée de la clavette, un ou plusieurs éléments élastiques sont agencés entre les deux demi-clavettes de façon à écarter élastiquement ces dernières. Ces éléments élastiques permettent de maintenir une pression d'adhérence suffisante entre la deuxième surface latérale de la languette et la deuxième surface latérale de la rainure, même en cas de déformation plastique de la languette, de la rainure et/ou de la clavette. La présence de de ces éléments élastiques limite aussi les efforts exercés lors de l'introduction de la clavette sur la première surface latérale de la languette et sur la première surface latérale de la rainure.

Dans une première exécution, la surface de contre-appui sur ladite première surface latérale de la languette, respectivement la surface de contre-appui sur ladite première surface latérale de la rainure, est formée par un ou plusieurs éléments en saillie par rapport à ladite première surface latérale de la languette, respectivement par rapport à ladite première surface latérale de la rainure. Ces éléments en saillie peuvent par exemple comprendre une nervure en saillie par rapport à ladite première surface latérale de la languette, respectivement par rapport à ladite première surface latérale de la rainure.

Dans une deuxième exécution, qui permet de sensiblement réduire la largeur du joint, la surface de contre-appui sur ladite première surface latérale de la languette, respectivement la surface de contre-appui sur ladite première surface latérale de la rainure, est formée par une encoche dans ladite première surface latérale de la languette, respectivement dans ladite première surface latérale de la rainure.

Une exécution préférée de la clavette a :
un axe central de clavette définissant la direction d'enfoncement de la clavette ;
une première surface de clavette faisant face à ladite première surface latérale de la languette ;
une deuxième surface de clavette faisant face à ladite première surface latérale de la rainure ;
au moins une première arrête faisant saillie par rapport à ladite première surface de clavette et définissant avec l'axe central de clavette un angle aigu ; et
au moins une deuxième arrête faisant saillie par rapport à ladite deuxième surface de clavette et définissant avec l'axe central de clavette un angle aigu de signe opposé.

Dans une exécution préférée de cette clavette, ladite première arrête faisant saillie par rapport à ladite première surface de clavette et ladite deuxième arrête faisant saillie par rapport à ladite deuxième surface de clavette sont des arrêtes tranchantes qui, lors de l'enfoncement de la clavette entre ladite première surface latérale de la languette et ladite première surface latérale de la rainure, s'incrustent dans ladite première surface latérale de la languette, respectivement dans ladite première surface latérale de la rainure, se créant ainsi elles-mêmes une surface de contre-appui sur la première surface latérale de la languette, respectivement une surface de contre-appui sur la première surface latérale de la rainure.

Une autre exécution de la clavette a :
un axe central de clavette définissant la direction d'enfoncement de la clavette ;
une première surface de clavette faisant face à ladite première surface latérale de la languette ;
une deuxième surface de clavette faisant face à ladite première surface latérale de la rainure ;
une paire de premières arrêtes parallèles faisant saillie par rapport à ladite première surface de clavette et définissant avec l'axe central de clavette un angle aigu ;
cette paire de premières arrêtes engageant une nervure faisant saillie de ladite première surface latérale de la languette ; et
une paire de deuxièmes arrêtes parallèles faisant saillie par rapport à ladite deuxième surface de clavette et définissant avec l'axe central de clavette un angle aigu de signe opposé ;
cette paire de secondes arrêtes engageant une nervure faisant saillie de ladite première surface latérale de la rainure.

Reste à noter qu'au moins certaines des arrêtes mentionnées ci-avant peuvent avoir un profil en dents de scie pour ancrer la clavette plus fermement dans le joint.

Selon une exécution particulièrement simple mais quand-même très efficace du système proposé :
la clavette comprend une barre ayant une épaisseur, un premier bord longitudinal, un deuxième bord longitudinal et un plan médian qui divise la barre selon son épaisseur en deux ;
la première surface latérale de la languette comprend un contre-appui angulaire en retrait ou en saillie ;
la première surface latérale de la rainure comprend un contre-appui angulaire en retrait ou en saillie ;
la barre prend appui avec son premier bord longitudinal sur le contre-appui angulaire de ladite première surface latérale de la languette et avec son deuxième bord latéral sur le contre-appui angulaire de ladite première surface latérale de la rainure ; et
la barre est agencée de façon à ce que son plan médian définisse un angle aigu avec la direction de pénétration de la languette dans la rainure.

Dans cette exécution, la réparation des pressions de contact sur les différentes surfaces de contact est fonction de l'angle entre le plan médian de la barre et la direction de pénétration de la languette dans la rainure. Plus cet angle devient aigu, plus la pression de contact entre la surface de jointement équipée de la languette et la surface de jointement équipée de la rainure augmente au détriment de la pression de contact entre la surface latérale de la languette et la surface latérale de la rainure.

Il sera noté que dans cette exécution, la barre a avantageusement une certaine élasticité transversale (dans le sens de sa largeur), de sorte à être déformée, lors de son enfoncement, élastiquement entre les deux contre-appuis angulaires. La précontrainte qui en résulte maintient la clavette en place et assure aussi le maintien d'une pression de contact relativement constante entre les surfaces de contact respectives.

Dans une exécution avantageuse, la barre à élasticité transversale comprend une section centrale élastiquement compressible. Cette section centrale élastiquement compressible est avantageusement formée par un élément en forme de tube délimité latéralement par des parois minces élastiquement déformables. Afin de faciliter la déformation élastique de ces parois minces, elles sont avantageusement ajourées et/ou ont, en section transversale, sensiblement la forme d'une lettre « Ω », la partie convexe étant tournée vers l'extérieur.

Dans une autre exécution avantageuse, la barre est formée d'une rangée de tiges élastiques, de sorte à avoir sensiblement la forme d'un peigne. Lors de l'enfoncement de la clavette, les tiges élastiques sont élastiquement déformées en flexion entre les deux contre-appuis angulaires. Ces tiges élastiques font dès lors fonction de multiples lames ressort exerçant une force d'assemblage sur les deux éléments de construction assemblés.

Une telle clavette peut aussi comprendre une deuxième barre qui prend appui avec son premier bord longitudinal sur un contre-appui angulaire de ladite deuxième surface latérale de la languette et avec son deuxième bord latéral sur le contre-appui angulaire d'une deuxième surface latérale de la rainure. Cette deuxième barre est elle aussi agencée de façon à ce que son plan médian définisse un angle aigu avec la direction de pénétration de la languette dans la rainure. Cette clavette avec ses deux barres est avantageusement symétrique par rapport à un plan médian qui, après montage de la clavette, correspond au plan médian de la languette. Une telle clavette à deux barres permet de centrer la languette dans la rainure tout en maintenant une pression de contact sensiblement constante entre les deux surfaces de jointement des éléments de construction à assembler.

Afin d'assurer un meilleur appui des bords longitudinaux de la barre sur leurs contre-appuis angulaires, ces bords longitudinaux peuvent être biseautés ou arrondis. La surface d'appui formée par les contre-appuis angulaires est avantageusement une surface convexe délimitée par des surfaces planes ou courbes.

La languette et la rainure peuvent avantageusement comprendre des surfaces de guidage qui prennent appui les unes sur les autres en fin du mouvement d'emboitement de la languette dans la rainure.

L'on présente aussi un élément de construction comprenant au moins deux surfaces de jointement opposées, dont l'une est équipée d'une languette et l'autre est équipée d'une rainure, et une cavité centrale interne, qui est nichée dans l'épaisseur de l'élément de construction et qui s'étend entre les deux surfaces de jointement opposées, préférentiellement jusqu'à proximité de ces surfaces de jointement opposées mais sans déboucher dans celles-ci. Il sera apprécié qu'un tel élément de construction peut être parfaitement raccourci tout en conservant les surfaces de jointement spécialement équipées. A cette fin, l'élément de construction est divisé en deux morceaux par une coupe transversale passant par la cavité centrale interne : un premier morceau portant d'un côté la surface de jointement équipée de la languette et de l'autre côté une première surface de coupe donnant accès à la cavité centrale interne dans ledit premier morceau ; et un deuxième morceau portant d'un côté la surface de jointement équipée de la rainure et de l'autre côté une deuxième surface de coupe donnant accès à ladite cavité centrale interne dans ledit deuxième morceau. Un des deux morceaux peut alors être raccourci du côté de sa surface de coupe, ceci en laissant subsister une partie de la cavité centrale interne dans ce morceau. Les deux morceaux sont alors assemblés au niveau de de leurs surfaces de coupe à l'aide d'une plaque ou d'une barre (voire de plusieurs barres), dont une extrémité est enfoncée dans la cavité centrale interne dudit premier morceau et une extrémité opposée est enfoncé dans la cavité centrale interne dudit deuxième morceau.

### Brève description des dessins

D'autres particularités et caractéristiques de l'invention ressortiront de la description détaillée de certains modes de réalisation avantageux présentés ci-dessous, à titre d'illustration, avec référence aux dessins annexés qui montrent :
- FIG. 1 :: une vue de face d'un assemblage de blocs de construction réalisé à l'aide du système de construction proposé ;
- FIG. 2:: une vue de face d'un bloc de construction tel qu'utilisé dans le mur de la FIG. 1 ;
- FIG. 3:: une vue latérale du bloc de construction de la FIG. 2 ;
- FIG. 4:: une coupe transversale d'une languette d'un premier élément de construction emboitée dans une rainure d'un deuxième élément de construction, ceci avant insertion d'une clavette ;
- FIG. 5:: la coupe transversale de la FIG. 4, ceci après insertion d'une clavette à double effet ;
- FIG. 6:: un détail agrandi de la FIG. 5, montrant la clavette en place et illustrant, à l'aide de flèches, les pressions exercées par la clavette ;
- FIG. 7:: une vue trois-dimensionnelle d'une première exécution d'une clavette à double effet ;
- FIG. 8:: une vue latérale de la clavette à double effet de la FIG. 7 ;
- FIG. 9:: une vue de face d'une clavette similaire à celle de la FIG. 7, sur le point d'être insérée dans son logement ;
- FIG. 10:: une vue de face de l'ensemble de la FIG. 9, la clavette étant complétement insérée dans son logement ;
- FIG. 11:: une coupe transversale montrant une deuxième exécution d'une clavette à double effet insérée dans un joint entre deux éléments de construction ;
- FIG. 12:: une vue en plan de la clavette à double effet de la FIG. 11 ;
- FIG. 13:: une coupe transversale montrant une troisième exécution d'une clavette à double effet insérée dans un joint entre deux éléments de construction ;
- FIG. 14:: une vue en plan d'une quatrième exécution d'une clavette à double effet ;
- FIG. 15:: une vue latérale de la clavette de la FIG. 14 ;
- FIG. 16:: une vue de l'extrémité arrière de la clavette de la FIG. 14 ;
- FIG. 17:: une vue trois-dimensionnelle montrant le dos d'une demi-clavette faisant partie de la clavette de la FIG. 14 ;
- FIG. 18:: une coupe transversale montrant la clavette de la FIG. 14 insérée dans un joint entre deux éléments de construction ;
- FIG. 19:: une vue trois-dimensionnelle d'une cinquième exécution d'une clavette à double effet.
- FIG. 20:: une coupe transversale d'une languette d'un premier élément de construction emboitée dans une rainure d'un deuxième élément de construction avec une sixième exécution d'une clavette à double effet.
- FIG. 21:: une coupe transversale similaire à celle de la Fig. 20, montrant une première variante d'exécution ; et
- FIG. 22:: une coupe transversale similaire à celle de la Fig. 20, montrant une deuxième variante d'exécution.
- FIG. 23:: une vue de face d'une clavette en forme de peigne ;
- FIG. 24:: une vue latérale de la clavette en forme de peigne de la FIG. 23 ;
- FIG. 25:: une vue latérale d'une double clavette selon le type de la FIG. 24 ;
- FIG. 26:: une coupe transversale d'une languette d'un premier élément de construction emboitée dans une rainure d'un deuxième élément de construction avec une clavette en forme de peigne similaire à celle de la FIG. 24 ;
- FIG. 27:: une coupe similaire à celle de la FIG. 26 avec une variante d'exécution de la clavette en forme de peigne ;
- FIG. 28:: une coupe transversale d'une languette d'un premier élément de construction emboitée dans une rainure d'un deuxième élément de construction avec une clavette en forme de peigne similaire à celle de la FIG. 25 ;
- FIG. 29:: une coupe similaire à celle de la FIG. 26 avec une variante d'exécution de la clavette en forme de peigne.
- FIG. 30:: une vue de face d'une variante d'exécution d'un bloc de construction ;
- FIG. 31:: une vue latérale du bloc de construction de la FIG. 30 ;
- FIG. 32:: une vue de face d'une autre exécution d'une clavette ;
- FIG. 33:: une coupe transversale de la clavette de la FIG. 32 ;
- FIG. 34:: une coupe transversale d'une languette d'un premier élément de construction emboitée dans une rainure d'un deuxième élément de construction, ceci après insertion de la clavette de la FIG.33 ; et
- FIG. 35A-35D :: des vues de faces d'un élément de construction qui illustrent les différentes étapes d'une réduction de sa longueur.

### Description détaillée de modes de réalisation de l'invention

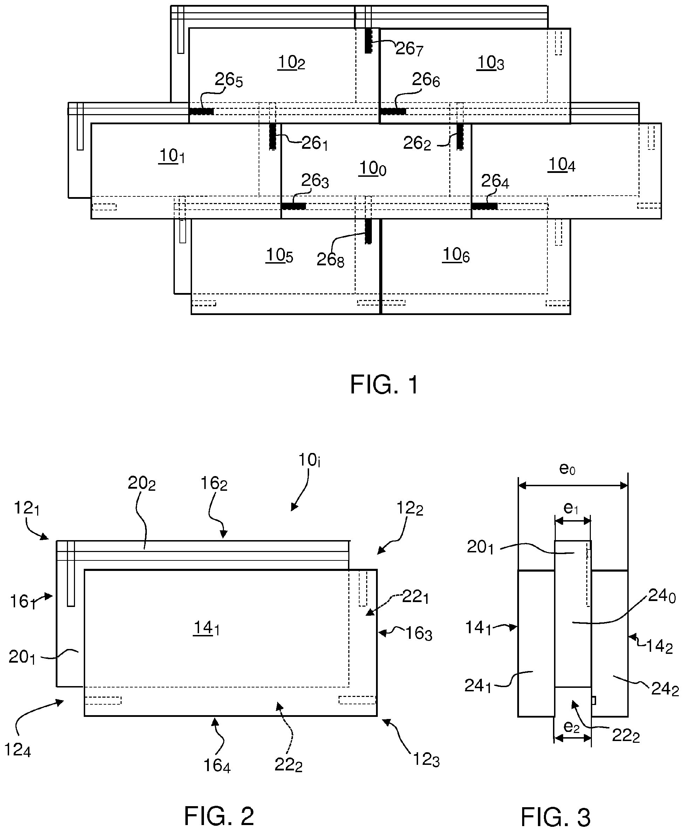

La FIG. 1 montre une vue de face d'un assemblage de sept blocs de construction 10ᵢ (i = 0 à 6) réalisé à l'aide d'un système de construction selon l'invention.

Comme le montrent les FIG. 2 et 3, un bloc de construction 10ᵢ de la FIG. 1 a sensiblement une forme de parallélépipède rectangle avec quatre coins 12₁, 12₂, 12₃, 12₄, deux surfaces de parement 14₁ et 14₂ opposées, et quatre surfaces de jointement 16₁, 16₂, 16₃, 16₄ opposées deux à deux. Chacune de ces surfaces de jointement 16₁, 16₂, 16₃, 16₄ est apte à former un joint d'avec au moins un bloc de construction adjacent 10ᵢ (cf. FIG. 1). Les deux surfaces de jointement adjacentes 16₁ et 16₂, qui coopèrent pour former le coin 12₁, sont équipées de languettes 20₁, 20₂, qui entourent le coin 12₁. Les deux surfaces de jointement adjacentes 16₃ et 16₄, qui coopèrent pour former le coin 12₃, sont équipées de rainures 22₁, 22₂, qui entourent le coin 12₃. La rainure 22₁ forme, au niveau du coin 12₂, une embouchure dans la face de jointement 16₂, et au niveau du coin 12₃, une embouchure dans la face de jointement 16₄. La rainure 22₂ forme, au niveau du coin 12₃, une embouchure dans la face de jointement 16₃, et au niveau du coin 12₄, une embouchure dans la face de jointement 16₁. Il sera noté que l'épaisseur e₁ des languettes 20ᵢ est assez importante et représente préférentiellement entre 10% et 40% et, plus préférentiellement, entre 25% et 40% de l'épaisseur e₀ du bloc de construction (cf. FIG. 3).

Un tel bloc de construction 10ᵢ peut encore être décrit comme étant un volume composé de deux parallélépipèdes rectangles extérieurs 24₁ et 24₂ et d'un parallélépipède rectangle médian 24₀ arrangé entre les deux parallélépipèdes rectangles extérieurs 24₁ et 24₂. Le parallélépipède rectangle médian 24₀ dépasse sur les deux surfaces de jointement adjacentes 16₁ et 16₂ du bloc de construction 10 pour former les deux languettes 20₁, 20₂. Les deux parallélépipèdes rectangles extérieurs 24₁ et 24₂ dépassent sur deux autres surfaces de jointement adjacentes 16₁ et 16₂ du bloc de construction 10 pour former entre elles les rainures 22₁, 22₂. Reste à noter que les deux parallélépipèdes rectangles extérieurs 24₁ et 24₂ ne doivent pas nécessairement avoir la même épaisseur tel que montré sur la FIG. 3. Ainsi, le parallélépipède rectangle extérieur 24₂, qui doit coopérer avec des clavettes 26ᵢ telles que décrites ci-dessous, peut avantageusement avoir une épaisseur plus importante que le parallélépipède rectangle extérieur 24₁, qui ne doit pas coopérer avec de telles clavettes 26ᵢ.

Le bloc de construction 10ᵢ peut être un bloc monolithe formé d'un seul matériau ou un bloc composite, notamment un bloc dans lequel les deux parallélépipèdes rectangles extérieurs 24₁ et 24₂ sont formés d'un autre matériau que le parallélépipède rectangle médian 24₀. Ainsi les deux parallélépipèdes rectangles extérieurs 24₁ et 24₂ peuvent par exemple être formés d'un matériau plus dur, et le parallélépipède rectangle médian 24₀ peut être formé d'un matériau d'une dureté inférieure mais qui est meilleur isolant. De plus, les deux parallélépipèdes rectangles extérieurs 24₁ et 24₂ peuvent eux aussi être formés de matériaux différents.

Des matériaux envisageables pour fabriquer les bloques sont par exemple : des matériaux minéraux classiques, notamment du béton, du béton cellulaire, de la terre cuite, du plâtre, du verre ; des éco-matériaux, notamment du bois massif, du bois lamellé-collé, des matériaux sur base de copeaux de bois, de sciure de bois ou de laine de bois, de paille, de chanvre, de miscanthus, simplement compactés ou agglomérés à l'aide d'un liant ; des matériaux synthétiques, notamment des matériaux synthétiques recyclés ; et/ou des matériaux métalliques.

Reste à noter que le plus souvent une surface de jointement d'un bloc de construction comprend une seule languette, voire une seule rainure. Il n'est cependant pas exclu d'avoir plusieurs languettes parallèles sur une face de jointement d'un bloc de construction, qui s'emboitent alors dans des rainures parallèles d'une face de jointement correspondante d'un bloc de construction adjacent.

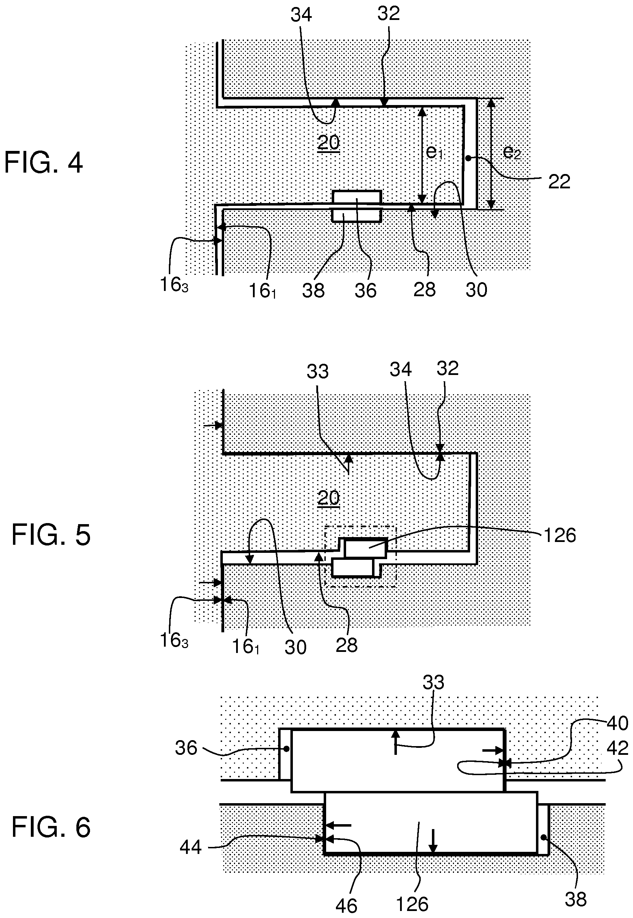

Se référant à la FIG. 3 ou 4, on notera que l'épaisseur e₁ d'une languette 20 est plus petite la largeur e₂ de la rainure correspondantes 22 dans laquelle elle doit s'emboiter. En d'autres termes, la languette 20ᵢ d'un premier bloc de construction est emboîtable avec jeu latéral dans une rainure 22ᵢ d'un deuxième élément de construction. Le jeu latéral de la languette 20ᵢ dans la rainure correspondante 22ᵢ, qui est défini comme étant la différence entre la largeur e₂ de la rainure 22 et l'épaisseur e₁ de la languette 20, est entre 2 mm et 25 mm, préférentiellement entre 5 mm et 25 mm. Ce jeu doit être suffisant pour pouvoir, lors de l'assemblage, aisément emboiter la languette 20 dans la rainure 22. Il sera encore noté que la longueur de la languette 20 est légèrement inférieure à la profondeur de la rainure 22 (cf. FIG. 5), de sorte à ce que la face de jointement 16₁ (portant la languette 20) puisse être pressée contre la face de jointement 16₃ du bloc adjacent (portant la rainure 22), avant que la languette 20 ne touche le fond de la rainure 22.

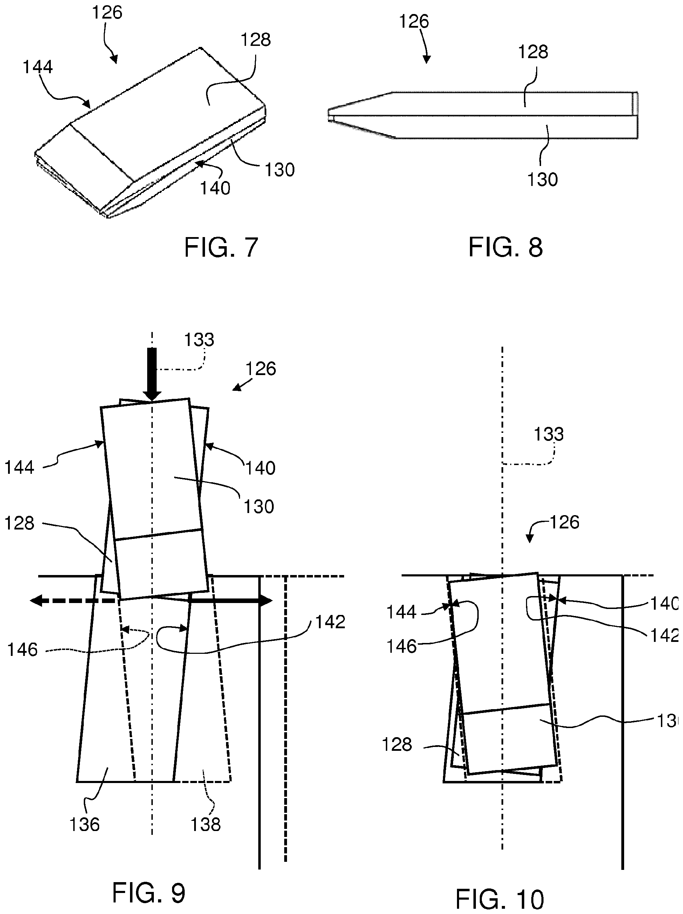

Comme illustré par la FIG. 1, le système de construction proposé comprend en outre des clavettes et/ou goujons 26ᵢ qui complètent l'assemblage des blocs de construction par languettes 20 et rainures 22. Selon un aspect important du système proposé, illustré notamment par les FIG. 4, 5 et 6, ces clavettes et/ou goujons 26ᵢ, dont l'extrémité avant est avantageusement configurée en forme de coin (cf. FIG. 7), sont enfoncés entre une première surface latérale 28 de la languette 20 et une première surface latérale 30 de la rainure 22, qui fait face à ladite première surface latérale 28 de la languette 20, de façon à pousser, par effet de coin, la languette 20 avec une deuxième surface latérale 32 fermement, en direction de la flèche 33, contre une deuxième surface latérale 34 de la rainure 22, qui fait face à ladite deuxième surface latérale 32 de la languette 20. En d'autres termes, en enfonçant la clavette ou le goujon 26ᵢ d'un côté dans le joint latéral entre la languette 20 et la rainure 22, l'on presse de l'autre côté, par effet de coin, la languette 20 avec sa deuxième surface latérale 32 fermement contre la deuxième surface latérale 34 de la rainure 22, créant ainsi une adhérence par pression entre ces deux surfaces 32 et 34. Cette adhérence par pression entre les deux surfaces 32 et 34 remplace efficacement une colle ou un mortier d'assemblage, en immobilisant la languette 20 dans sa rainure 22 et en rendant l'assemblage languette-rainure plus ou moins étanche à l'air.

Dans l'exécution des FIG. 4 et 5, la première surface latérale 28 de la languette 20 et la première surface latérale 30 de la rainure 22 comprennent des encoches juxtaposées 36, 38, qui définissent un logement pour une clavette double effet 126. Une telle clavette double effet 126 est conçue de façon à produire les deux effets suivants lors de son enfoncement entre la première surface latérale 28 de la languette 20 et la première surface latérale 30 de la rainure 22 :
i) pousser la languette 20, par effet de coin, dans la direction de la flèche 33, avec sa deuxième surface latérale 32 fermement contre la deuxième surface latérale 34 de la rainure 22, qui fait face à ladite deuxième surface latérale 32 de la languette 20; et
ii) à pousser davantage la languette 20 dans la rainure 22, de sorte à pousser la surface de joint 16₁, qui porte la languette 20, fermement contre la surface de joint 16₃, qui comprend la rainure 22 dans laquelle la languette s'emboite.

Pour produire l'effet ii), la clavette à double effet 126 comprend : 1) une première surface latérale d'appui 40 prenant appui, selon une première direction parallèle à la première surface latérale 28 de la languette 20, sur une surface de contre-appui 42 sur la première surface latérale 28 de la languette ; et 2) une deuxième surface latérale d'appui 44 prenant appui, selon une deuxième direction parallèle à la première surface latérale 30 de la rainure 22 et en direction opposée à ladite première direction, sur une deuxième surface de contre-appui 46 associé à ladite première surface latérale de la rainure 22. Dans l'exécution des FIG. 4 à 6, ces surfaces de contre-appui 42 et 46 sont formées par les surfaces latérales des encoches 36, 38. La première surface latérale d'appui 40 de la clavette 126 et la deuxième surface latérale d'appui 44 de la clavette 126 définissant avantageusement entre elles un angle aigue, de façon à pousser par effet de coin la languette 20 dans la rainure 22, lors de l'enfoncement de la clavette 126 entre la première surface latérale 28 de la languette 20 et la première surface latérale 30 de la rainure 22.

Comme illustré par les FIG. 7 et 8, la clavette 126 est avantageusement composée de deux demi-clavettes 128, 130 sensiblement identiques agencées dos-à-dos avec un léger désaxage axial entre elles. L'une des deux demi-clavettes 128, 130 forme la première surface latérale d'appui 140, qui prend appui sur la première surface de contre-appui 42 sur la première surface latérale 28 de la languette 20, et l'autre des deux demi-clavettes 128, 130 forme la deuxième surface latérale d'appui 144 qui prend appui sur la surface de contre-appui 46 sur la première surface latérale 30 de la rainure 22. Dû au désaxage axial des deux demi-clavettes 128, 130, les deux surfaces latérales d'appui 140, 144 produisent un effet de coin lors de l'enfoncement de la clavette 126 entre la première surface latérale 28 de la languette 20 et la première surface latérale 30 de la rainure 22.

Les FIG. 9 et 10 montrent une exécution préférée dans laquelle la surface de contre-appui 142 a, par rapport à la direction d'enfoncement de la clavette 126 (illustrée par la flèche 133), sensiblement la même inclinaison que la surface latérale d'appui 140 de la clavette 126, et la deuxième surface de contre-appui 146 a, toujours par rapport à la direction d'enfoncement de la clavette 126, sensiblement la même inclinaison que la surface latérale d'appui 144 de la clavette 126. Cette exécution assure une plus grande surface de contact entre la clavette 126 et les surfaces de contre-appui 142, 146 et, par conséquent, une meilleure répartition de la pression exercée par la clavette 126 sur les surfaces de contre-appui 142, 146 des éléments de construction (c'est-à-dire que, lors de l'enfoncement de la clavette 126, les surfaces de contre-appui 142, 146 risquent moins d'être endommagées). Les FIG. 9 et 10 permettent aussi de comprendre qu'un agencement en forme de « X » des deux demi-clavettes 128, 130 nécessite, par rapport à un agencement en forme de « V », moins de la place pour l'intégration des encoches 136, 138 dans la languette 20, respectivement la rainure 22 (c'est-à-dire que la hauteur de la languette 20, respectivement la profondeur de la rainure 22, peut être plus faible).

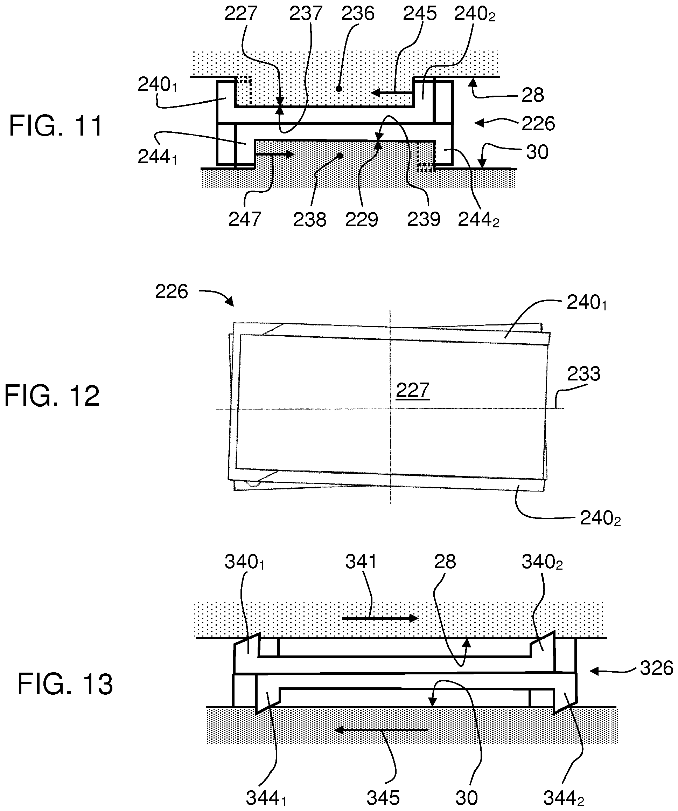

La FIG. 11 montre une coupe transversale d'une deuxième exécution d'une clavette à double effet 226 insérée dans un joint entre deux éléments de construction. Au lieu de comprendre des encoche juxtaposées 36, 38, la première surface latérale 28 de la languette 20 et la première surface latérale 30 de la rainure 22 comprennent des nervures juxtaposées 236 et 238. Une première surface de clavette 227 s'appuie sur une surface frontale 237 de la nervure 236. Une deuxième surface de clavette 229 s'appuie une surface frontale 239 de la nervure 238. La clavette 226 comprend en outre deux premières arrêtes 240₁ et 240₂ faisant saillie par rapport à la première surface de clavette 227 et définissant avec l'axe central 233 de la clavette 226 un angle aigu (cf. FIG. 12), ainsi que deux deuxième arrêtes 244₁ et 244₂ faisant saillie par rapport à la deuxième surface de clavette 229 et définissant avec l'axe central 233 de la clavette 226 un angle aigu de signe opposé (cf. FIG. 12). (Il sera noté que l'axe central 233 de la clavette 226 correspond à la direction d'enfoncement de la clavette 226.) La nervure 236 a, par rapport l'axe central 233 de la clavette 226, sensiblement la même inclinaison que les premières arrêtes 240₁ et 240₂. La nervure 238 a, par rapport l'axe central 233 de la clavette 226, sensiblement la même inclinaison que les deuxièmes arrêtes 244₁ et 244₂. En enfonçant la clavette 226 dans le joint, l'arrête 240₂ prend appui sur le bord latéral de la nervure 236 pour pousser celle-ci dans la direction de la flèche 245, et l'arrête 244₁ prend appui sur le bord latéral de la nervure 238 pour pousser celle-ci dans la direction de la flèche 247. Reste à noter que les arrêtes 240₁ et 244₂ améliorent le guidage de la clavette 226 et facilitent, le cas échéant, un désassemblage de deux éléments de construction 10ᵢ.

La FIG. 13 montre troisième exécution d'une clavette à double effet 326. Cette clavette 326 est de construction similaire à celle de la clavette 226 des FIG. 11 et 12. Au lieu d'avoir des arrêtes 240₁, 240₂, 244₁, 244₂ qui coopèrent avec des nervures 236, 238, elle a des arrêtes tranchantes 340₁, 340₂, 344₁, 344₂ qui s'incrustent dans première surface latérale 28 de la languette 20 en définissant avec l'axe central de la clavette 326 un angle aigu, respectivement dans la première surface latérale 30 de la rainure 22 en définissant avec l'axe central de la clavette 326 un angle aigu de signe opposé. En enfonçant la clavette 326 dans le joint, les arrêtes tranchantes 340₁, 340₂ obliques poussent la languette 20 dans la direction de la flèche 341, et les arrêtes tranchantes 344₁, 344₂ obliques poussent la rainure 22 dans la direction de la flèche 345.

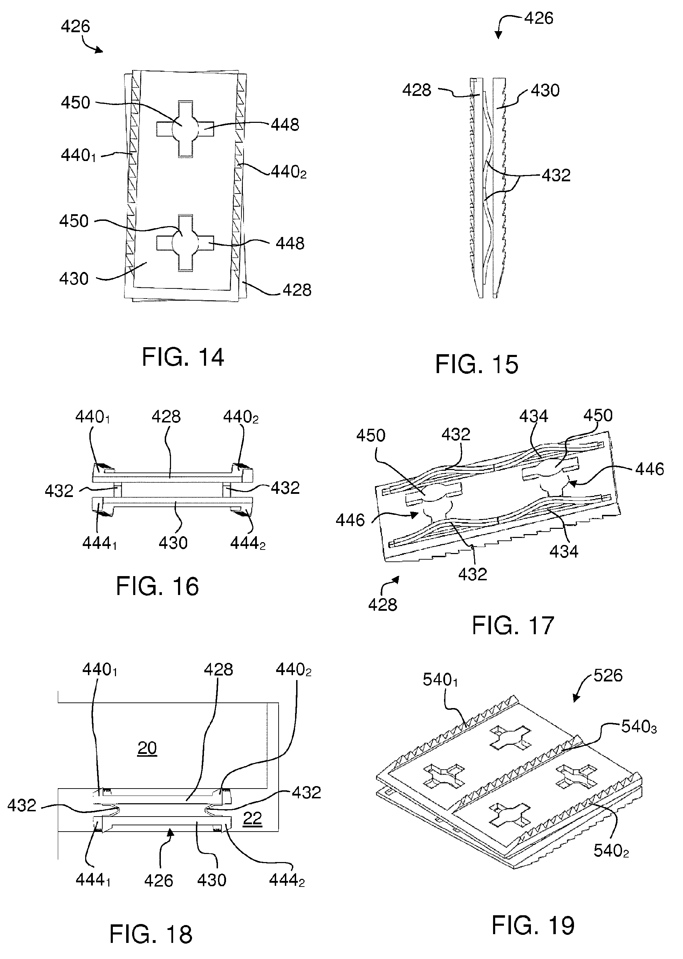

Les FIG. 14 à 18 montrent une quatrième exécution d'une clavette à double effet 426. Comme les clavettes précédentes, la clavette 426 est composée de deux demi-clavettes 428, 430 sensiblement identiques agencées dos-à-dos avec un léger désaxage axial entre elles. Entre les deux demi-clavettes 428, 430 sont agencés des éléments ressorts 432 qui écartent les deux demi-clavettes 428, 430 (cf. FIG. 15). Lorsque la clavette 426 est enfoncée dans le joint, les éléments ressorts 432 sont comprimés, de sorte que la clavette 426 exerce constamment une pression sur la languette 20 emboitée dans rainure 22. De tels éléments ressorts 432 peuvent bien entendu aussi être prévus dans les clavettes 126, 226 et 326. Dans une exécution préférée, les éléments ressorts sont des ressorts à lames 432 de forme sinusoïdale, logés, comme montrés dans la FIG. 17, dans des gorges 434 aménagées dans le dos des deux demi-clavettes 428, 430. L'utilisation d'autres types de ressorts, voire d'autres éléments aptes à écarter élastiquement les deux demi-clavettes 428, 430, de sorte à exercer constamment une pression sur la languette 20 emboitée dans rainure 22, n'est cependant pas exclue.

Les deux demi-clavettes 428, 430 sont avantageusement tenus ensembles à l'aide de de tenons 446 agencés sur le dos d'une des deux demi-clavettes 428, chacun de ces tenons 446 traversant une mortaise 448 de l'autre demi-clavette 430. De l'autre côté de la mortaise 448, chacun des tenons 446 est pourvu d'une tête de verrouillage rotative 450. Ces tenons 446 limitent l'écartement maximal des deux demi-clavettes 428, 430 tout en permettant leur rapprochement par compression des ressorts 432. Reste à noter que les arrêtes 440₁, 440₂, 444₁, 444₂ de la clavette 426 sont des arrêtes tranchantes ayant un profil en dents de scie. Ce profil en dents de scie ancre la clavette 426 fermement dans le joint languette/rainure, comme illustré dans la FIG. 18.

La FIG. 19 montre une cinquième exécution d'une clavette à double effet 526. Cette clavette 526 est de construction similaire à celle de la clavette 426 des FIG. 14 à 17. Elle se distingue de celle-ci principalement par une largeur plus grande et trois arrêtes tranchantes 540₁, 540₂, 540₃ de chaque côté de la clavette 526.

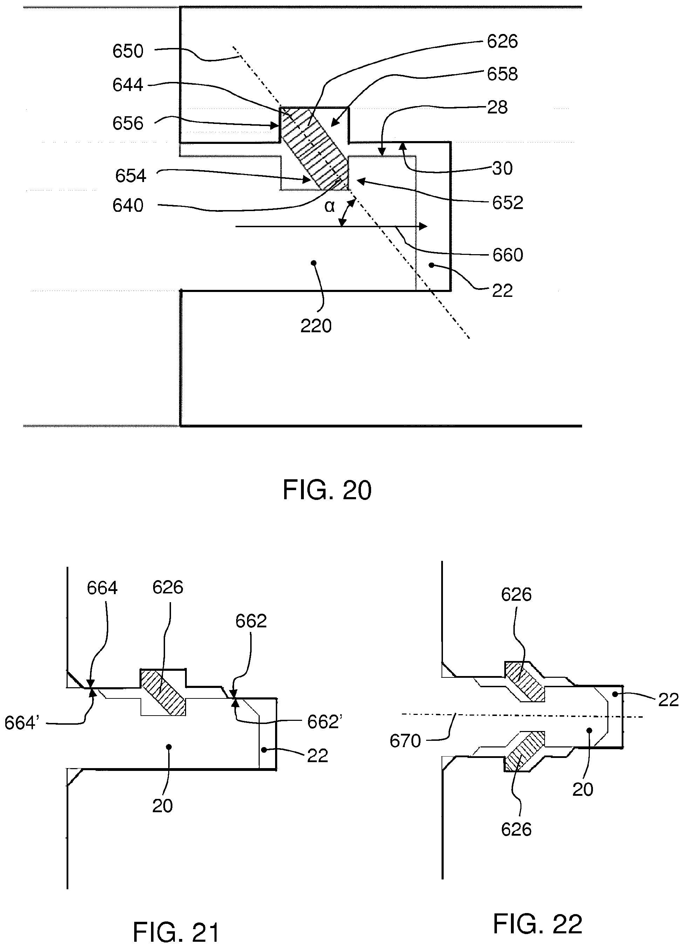

Dans l'exécution de la FIG. 20, la clavette 626 a la forme d'une barre ayant un premier bord longitudinal 640, un deuxième bord longitudinal 644 et un plan médian 650 qui divise la clavette selon son épaisseur en deux. La première surface latérale 28 de la languette 20 comprend un contre-appui angulaire 652 en retrait dans une gorge 654. La première surface latérale 30 de la rainure 22 comprend un contre-appui angulaire 656 en retrait dans une gorge 658. La clavette 626 prend appui avec son premier bord longitudinal 640 sur le contre-appui angulaire 652 de la première surface latérale 28 de la languette 20 et avec son deuxième bord latéral 644 sur le contre-appui angulaire 656 de la première surface latérale 30 de la rainure 22. La clavette 626 est agencée de façon à ce que son plan médian 650 définisse un angle aigu avec la direction de pénétration de la languette 20 dans la rainure 22, représentée par la flèche 660. Dans cette exécution, la réparation des pressions de contact sur les différentes surfaces de contact est fonction de l'angle α entre le plan médian 650 de la clavette et la direction de pénétration de la languette dans la rainure (cf. flèche 660). Plus cet angle α devient aigu, plus la pression de contact entre la surface de jointement équipée de la languette et la surface de jointement équipée de la rainure augmente au détriment de la pression de contact entre la surface latérale de la languette et la surface latérale de la rainure.

Il sera noté que dans cette exécution, la clavette 626 en forme d'une barre a avantageusement une certaine élasticité transversale (dans le sens de sa largeur), de sorte à être comprimée entre les deux contre-appuis angulaires lors de son enfoncement. Cette précontrainte maintient la clavette en place et assure aussi le maintien d'une pression de contact relativement constante entre les surfaces de contact respectives.

Afin d'assurer un meilleur appui des bords longitudinaux 640, 644 de la clavette 626 sur leurs contre-appuis angulaires 652, 656, ces bords longitudinaux 640, 644 peuvent être biseautés, tel que montré sur les FIG. 20 à 22, ou arrondis. La surface d'appui formée par les contre-appuis angulaires 652, 656 est avantageusement une surface convexe délimitée par des surfaces planes, tel que montré sur les FIG. 20 à 22, ou par des surfaces courbes. Au lieu d'être formés par une gorge 654, 658 dans la première surface latérale 28 de la languette 20, respectivement la première surface latérale 30 de la rainure 22, les contre-appuis angulaires 652, 656 pourraient aussi être formés par un élément en sailli par rapport à la première surface latérale 28 de la languette 20, respectivement la première surface latérale 30 de la rainure 22.

Comme montré sur la FIG. 21, la languette 20 et la rainure 22 peuvent avantageusement comprendre des surfaces de guidage 662, 662', respectivement 664, 664', qui prennent appui les unes sur les autres, de préférence uniquement en fin du mouvement d'emboitement de la languette 20 dans la rainure 22.

L'exécution de la FIG. 22 se distingue de l'exécution de la FIG. 21 par le fait que la languette 20 et la rainure 22 sont complètement symétriques par rapport au plan médian 670, ce qui permet de placer la clavette 626 des deux côtés de la languette 20, voire même de placer exceptionnellement une clavette 626 de chaque côté de la languette 20.

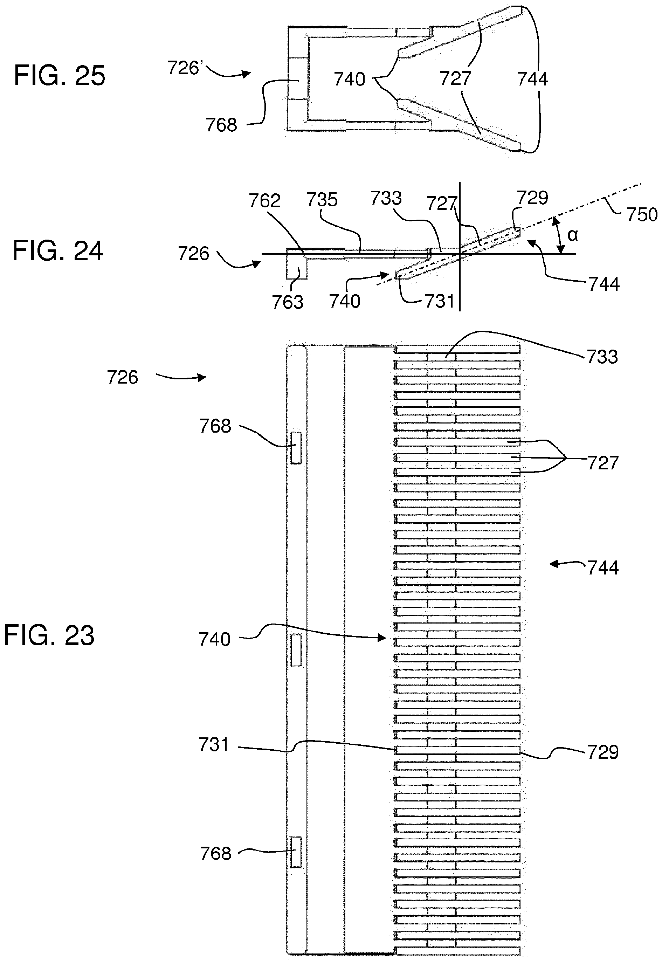

Les FIG. 23 à 25 montrent des clavettes 726, 726' similaires aux clavettes 626 des FIG. 20-22. Chacune de ces clavettes 726, 726' comprend au moins une rangée de tiges élastiques 727 parallèles agencée de façon à former une barre ayant la forme d'un peigne. Chacune de ces tiges élastiques 727 a une première extrémité 729 et une deuxième extrémité 731. Une base transversale 733 supporte ces tiges élastiques 727 entre ces deux extrémités 729 et 731, de façon à ce que les premières extrémités 729 dépassent d'un côté pour former un premier bord longitudinal 740 et les deuxièmes extrémités 731 dépassent d'un côté pour former un deuxième bord longitudinal 744.

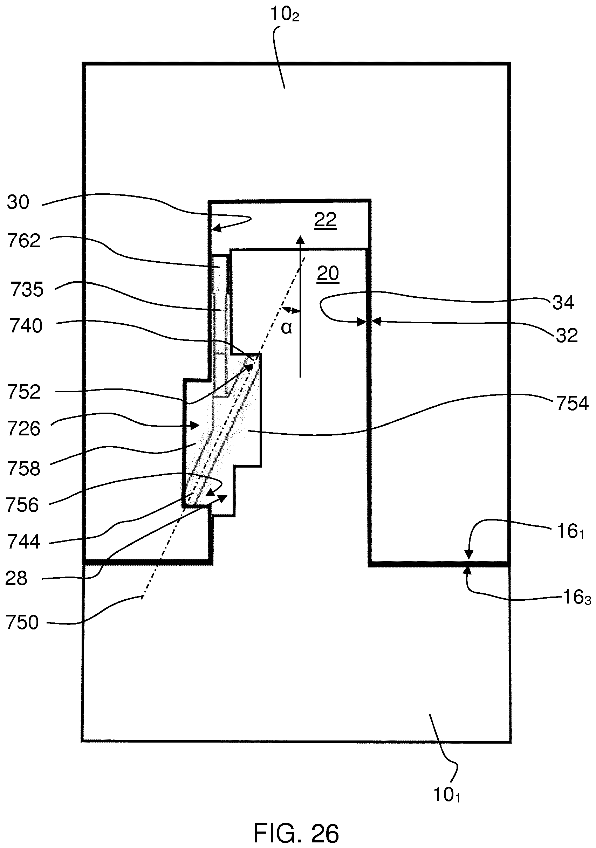

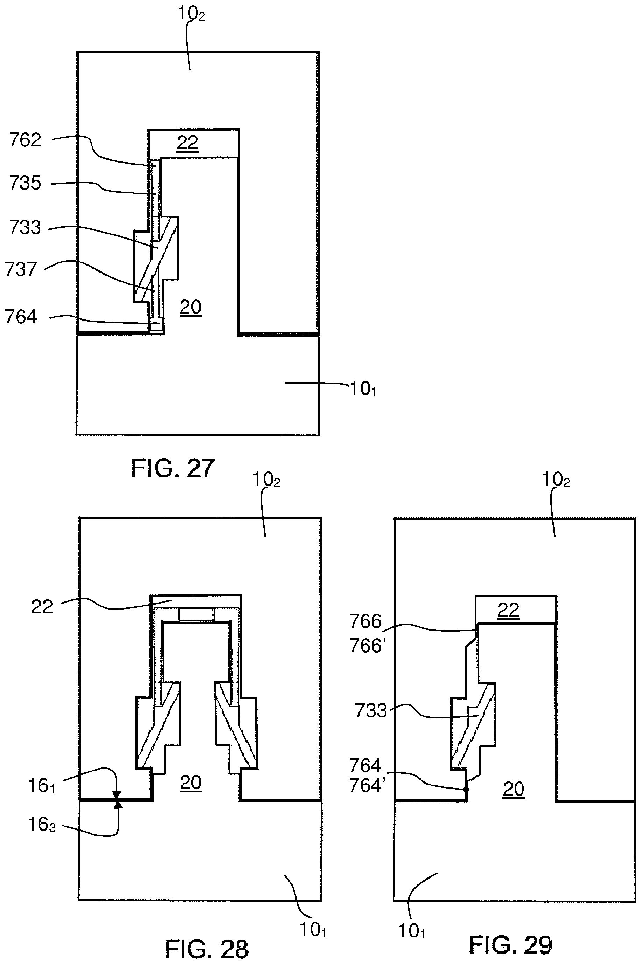

Sur la FIG. 26 l'on voit que la première surface latérale 28 de la languette 20 comprend un contre-appui angulaire 752 en retrait dans une gorge 754. La première surface latérale 30 de la rainure 22 comprend un contre-appui angulaire 756 en retrait dans une gorge 758. La clavette 726 prend appui avec son premier bord longitudinal 740 sur le contre-appui angulaire 752 de la première surface latérale 28 de la languette 20 et avec son deuxième bord latéral 744 sur le contre-appui angulaire 756 de la première surface latérale 30 de la rainure 22. Un premier prolongement 735 de la base transversale 733 est agencé entre la première surface latérale 28 de la languette 20 et la première surface latérale 30 de la rainure 22. Dans cette position le plan médian 750 des tiges élastiques 727 définit un angle aigu avec la direction de pénétration de la languette 20 dans la rainure 22, représentée sur la FIG. 27 par la flèche 760. Il sera noté que, lors de l'enfoncement de la clavette 726, les tiges élastiques 727 sont élastiquement déformées en flexion entre les deux contre-appuis angulaires 752, 756. Ces tiges élastiques 727 font fonction de multiples ressorts à lame exerçant une force d'assemblage sur les deux éléments de construction assemblés. Il s'ensuit qu'il y a mise en précontrainte de la clavette 726, ce qui la maintient en place et assure aussi le maintien d'une pression de contact relativement constante entre les surfaces de contact respectives des éléments de construction à assembler, c'est-à-dire entre les deux surfaces de jointement 16₁, 16₃ et entre la deuxième surface latérale 32 de la languette 20 et la deuxième surface latérale 34 de la rainure 22. La répartition des pressions de contact sur les différentes surfaces de contact est fonction de l'angle α entre le plan médian 750 de la clavette et la direction de pénétration de la languette dans la rainure (cf. flèche 760). Plus cet angle α devient aigu, plus la pression de contact entre la surface de jointement équipée de la languette et la surface de jointement équipée de la rainure augmente, ceci au détriment de la pression de contact entre la surface latérale de la languette et la surface latérale de la rainure. Cet angle α mesure de préférence entre 15° et 30°.

Reste à noter qu'au lieu d'être formés par une gorge 754, 758 dans la première surface latérale 28 de la languette 20, respectivement la première surface latérale 30 de la rainure 22, les contre-appuis angulaires pourraient aussi être formés par un élément en sailli par rapport à la première surface latérale 28 de la languette 20, respectivement la première surface latérale 30 de la rainure 22.

Comme montré sur les FIG. 24 à 28, le prolongement 735 de la base transversale 733 peut avantageusement comprendre, à proximité de l'extrémité libre de la languette 20, un élément de guidage 762. Cet élément de guidage 762, dont l'épaisseur transversale correspond sensiblement au jeu latéral de la languette 20 dans la rainure 22, alors que le reste prolongement 735 de la base transversale 733 est moins épais, facilite l'emboitement de la languette 20 dans la rainure 22, la reprise du jeu latéral de la languette 20 dans la rainure 22 et permet de diminuer les efforts à produire par les tiges élastiques 727 de la clavette 726 pour garantir une bonne stabilité de l'assemblage. La référence 763 dans la FIG. 24 repère un arrêt qui prend appui sur la surface frontale de la languette 20 et permet de plus facilement positionner la clavette 726 par rapport à la languette 20.

Dans l'exécution de la FIG. 27, la base transversale 733 comprend en outre un deuxième prolongement 737 qui forme, à proximité du pied de la languette 20, un deuxième élément de guidage 764 dont l'épaisseur transversale correspond sensiblement au jeu latéral de la languette 20 dans la rainure 22. Dans l'exécution de la FIG. 29, la clavette 726 comprend une base transversale 733 sans prolongements. Dans cette exécution la languette 20 et la rainure 22 comprennent des surfaces de guidage 764, 764', respectivement 766, 766', qui prennent appui les unes sur les autres, de préférence uniquement en fin du mouvement d'emboitement de la languette 20 dans la rainure 22.

La clavette 726' des FIG. 25 et 28, est composée de deux clavettes 726 symétriques qui sont assemblées par un ou plusieurs ponts 768. Cette clavette 726' comprend dès lors deux rangées symétriques de tiges élastiques 727. Comme illustré par la FIG. 28, une telle clavette 726' permet de centrer la languette 20 dans la rainure 22. Elle permet essentiellement le maintien d'une pression de contact entre les deux surfaces de jointement 16₁, 16₃ des éléments de construction 10 à assembler.

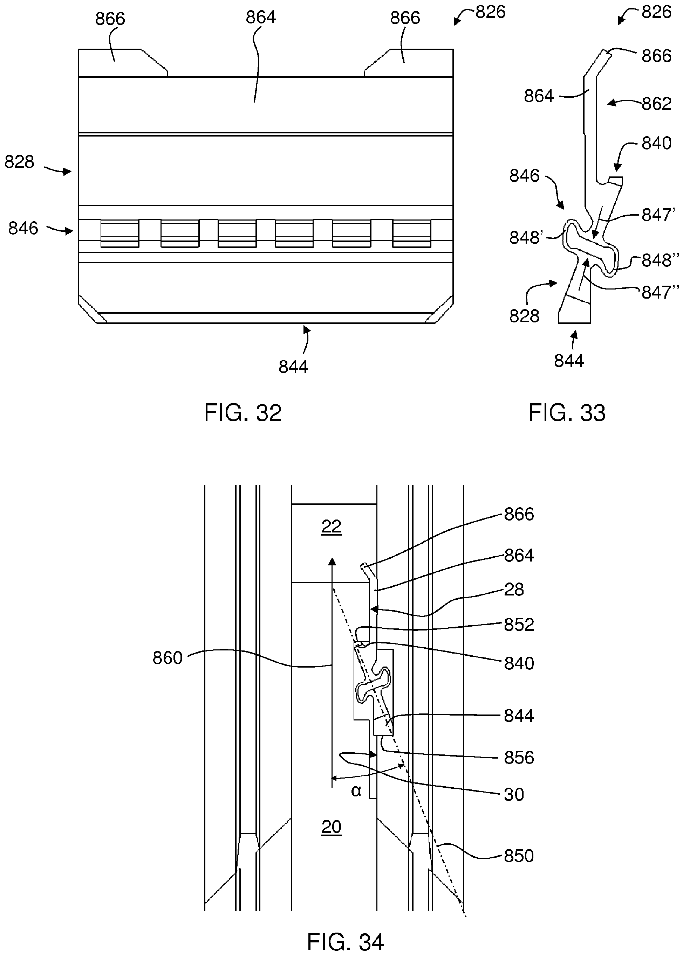

Les FIG. 32 et 33 montrent une clavette 826 similaire à la clavette 626 des FIG. 20-22 et à la clavette 726 des FIG. 23 et 24. Cette clavette comprend un élément 828 en forme de barre avec un premier bord longitudinal 840 et un deuxième bord longitudinal 844. L'élément en forme de barre 828 comprend une section centrale 846 élastiquement compressible en direction de la largeur de l'élément 828 (cf. flèches 847' et 847"). Dans l'exécution avantageuse montrée sur les FIG. 32 et 33, cette section centrale 846 élastiquement compressible est plus particulièrement formée par un élément en forme de tube à parois minces 848', 848" élastiquement déformables. Afin de faciliter la déformation élastique de ces parois minces 848', 848", elles sont avantageusement ajourées (cf. FIG. 32) et/ou ont, en section transversale, sensiblement la forme d'une lettre « Ω », la partie convexe étant tournée vers l'extérieur.

Comme montré sur la FIG. 34, la clavette 826 prend appui avec son premier bord longitudinal 840 sur un contre-appui angulaire 852 de la première surface latérale 28 de la languette 20 et avec son deuxième bord latéral 844 sur un contre-appui angulaire 856 de la première surface latérale 30 de la rainure 22. La clavette 826 est agencée de façon à ce qu'un plan médian 850 de l'élément 828 définisse un angle aigu α avec la direction de pénétration de la languette 20 dans la rainure 22, représentée par la flèche 860. La réparation des pressions de contact sur les différentes surfaces de contact est fonction de l'angle α entre le plan médian 850 de l'élément 828 et la direction de pénétration de la languette dans la rainure (cf. flèche 860). Plus cet angle α devient aigu, plus la pression de contact entre la surface de jointement équipée de la languette et la surface de jointement équipée de la rainure augmente au détriment de la pression de contact entre la surface latérale de la languette et la surface latérale de la rainure. Le fait que, lors de l'enfoncement de la clavette 826, la section centrale 846 soit élastiquement comprimée en direction de la largeur de l'élément 828 assure une précontrainte qui maintient la clavette 826 en place et assure aussi le maintien d'une pression de contact relativement constante entre les surfaces de contact respectives.

Un prolongement 862 de l'élément 828 en forme de barre est agencé entre la première surface latérale 28 de la languette 20 et la première surface latérale 30 de la rainure 22. Ce prolongement 862 comprend avantageusement, à proximité de l'extrémité libre de la languette 20, un élément de guidage 864. Cet élément de guidage 864, dont l'épaisseur transversale correspond sensiblement au jeu latéral de la languette 20 dans la rainure 22, alors que le reste prolongement 862 est moins épais, facilite l'emboitement de la languette 20 dans la rainure 22, la reprise du jeu latéral de la languette 20 dans la rainure 22 et améliore aussi stabilité de l'assemblage. La référence 866 repère une patte qui dépasse dans la rainure 22 au-delà de la surface frontale de la languette 20. Cette patte 866 permet de retirer la clavette 826 plus facilement, lorsque l'on veut défaire l'assemblage.

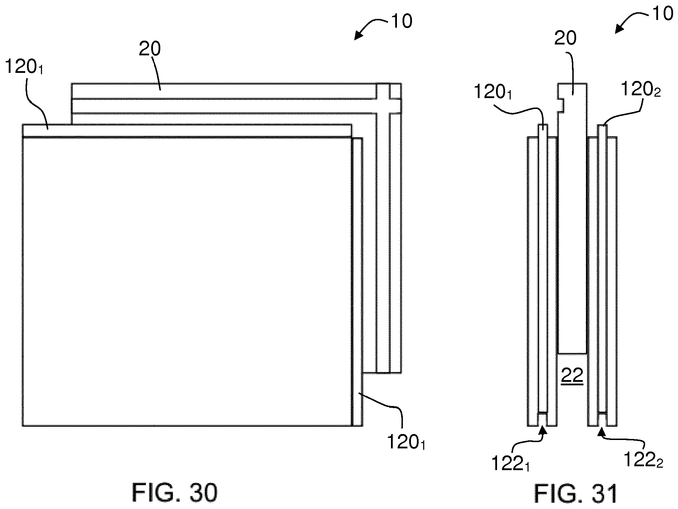

Les FIG. 30 et 31 montrent une variante d'exécution des éléments de construction 10 à assembler. Dans cette variante d'exécution, des languettes auxiliaires 120ᵢ et rainures auxiliaires 122ᵢ sont agencées sur, respectivement dans, les surfaces de jointement 16ᵢ le long des languettes 20ᵢ et rainures 22ᵢ principales, c'est-à-dire le long des languettes 20ᵢ et rainures 22ᵢ qui coopèrent avec la clavette pour pousser la surface de jointement du premier élément de construction, fermement contre la surface de jointement du deuxième élément de construction. Ces languettes auxiliaires 120ᵢ et rainures auxiliaires 122ᵢ servent à augmenter l'étanchéité entre ces surfaces de jointement 16ᵢ.

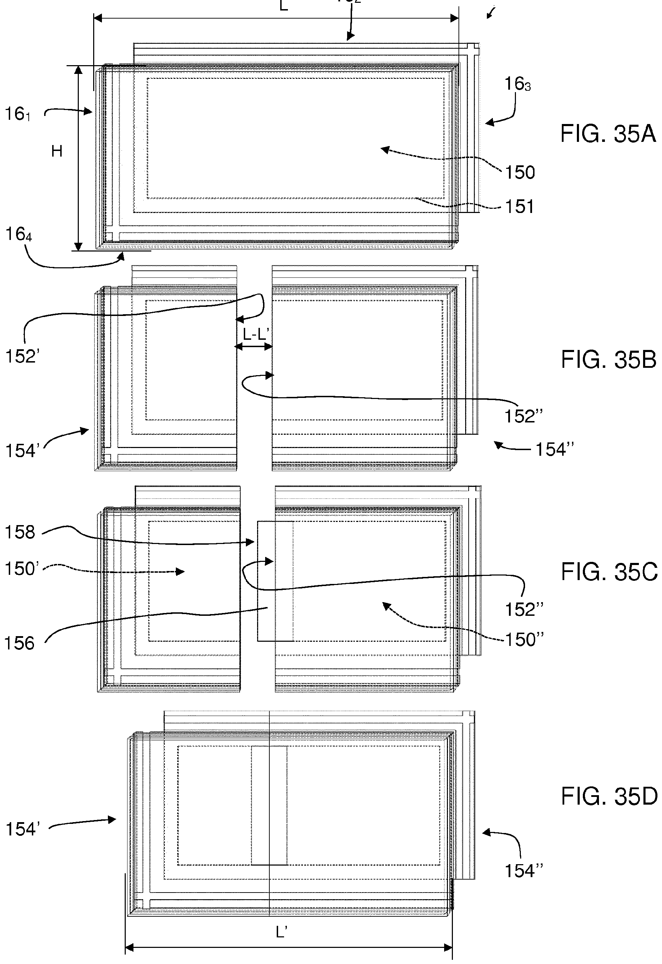

Les FIG. 35A à 35D illustrent un ajustement de la longueur d'un élément de construction 10. La FIG. 35A montre un élément de construction 10 avec une longueur standard « L » et de hauteur standard « H » dont les quatre surfaces de jointement 16ᵢ sont équipées de rainures et languettes d'assemblage. L'élément de construction 10 proposé pour la mise en œuvre de cette méthode d'ajustage comprend plus spécialement une cavité interne 150 qui s'étend au milieu de l'épaisseur de l'élément de construction 10 sur la plus grande partie de la longueur « L » et sur une grande partie de la hauteur de l'élément de construction 10 (cf. le rectangle 151 dessiné en pointillé, qui indique les dimensions de cette cavité interne 150). Pour obtenir un élément de construction 10' avec une longueur réduite « L' » (cf. FIG. 35D), l'on découpe de l'élément standard 10, au niveau de l'extension de la cavité interne 150, à l'aide de deux coupes parallèles, un morceau central d'une longueur L-L' (cf. FIG. 35B, dans laquelle le morceau central de longueur L-L' est déjà enlevé). Chacune des surfaces de coupe 152', 152" des deux morceaux résiduels d'extrémité 154', 154" montrés sur la FIG. 35B présente dès lors une ouverture donnant accès à une partie résiduelle 150', 150" de la cavité interne 150 dans le morceau d'extrémité 154', 154" respectif. Dans la partie résiduelle 150" de la cavité interne 150 du morceau d'extrémité 154", on insère ensuite une plaque 156 et on la fixe de façon à ce qu'elle forme une languette 158 en saillie par rapport à la surface de coupe 152" du morceau d'extrémité 154" (cf. FIG. 35C). Puis les deux morceaux d'extrémité 154' et 154" sont assemblés en faisant pénétrer la languette 158 dans la partie résiduelle 150' de la cavité interne 150 du morceau d'extrémité 154' (cf. FIG. 35D). La languette 158 est avantageusement fixée au morceau d'extrémité 154' et au morceau d'extrémité 154" par une colle, par des vis ou clous, par des goujons ou par tout autre élément ou système de fixation. De façon décrite ci-dessus, l'on pourrait par ailleurs aussi réduire la hauteur H d'un élément de construction 10.

Reste à noter qu'au lieu de réaliser l'assemblage à l'aide d'une plaque formant une languette continue sur une grande partie de la hauteur, l'on pourrait aussi réaliser l'assemblage à l'aide de plusieurs tenons (non illustrés). Dans ce cas, l'unique cavité interne 150 montrée sur les FIG. 35 serait remplacée plusieurs cavités internes (non illustrées) qui sont parallèles entre elles-mêmes et dont la section correspond sensiblement à celle des tenons.

Alors que des modes de réalisation particuliers viennent d'être décrits en détail, l'homme du métier appréciera que diverses modifications et alternatives à ceuxlà puissent être développées sans toutefois sortir de la portée des revendications annexées. Par conséquent, les agencements et/ou procédés spécifiques décrits ci-dedans sont censés être donnés uniquement à titre d'illustration, sans intention de limiter la portée de l'invention.

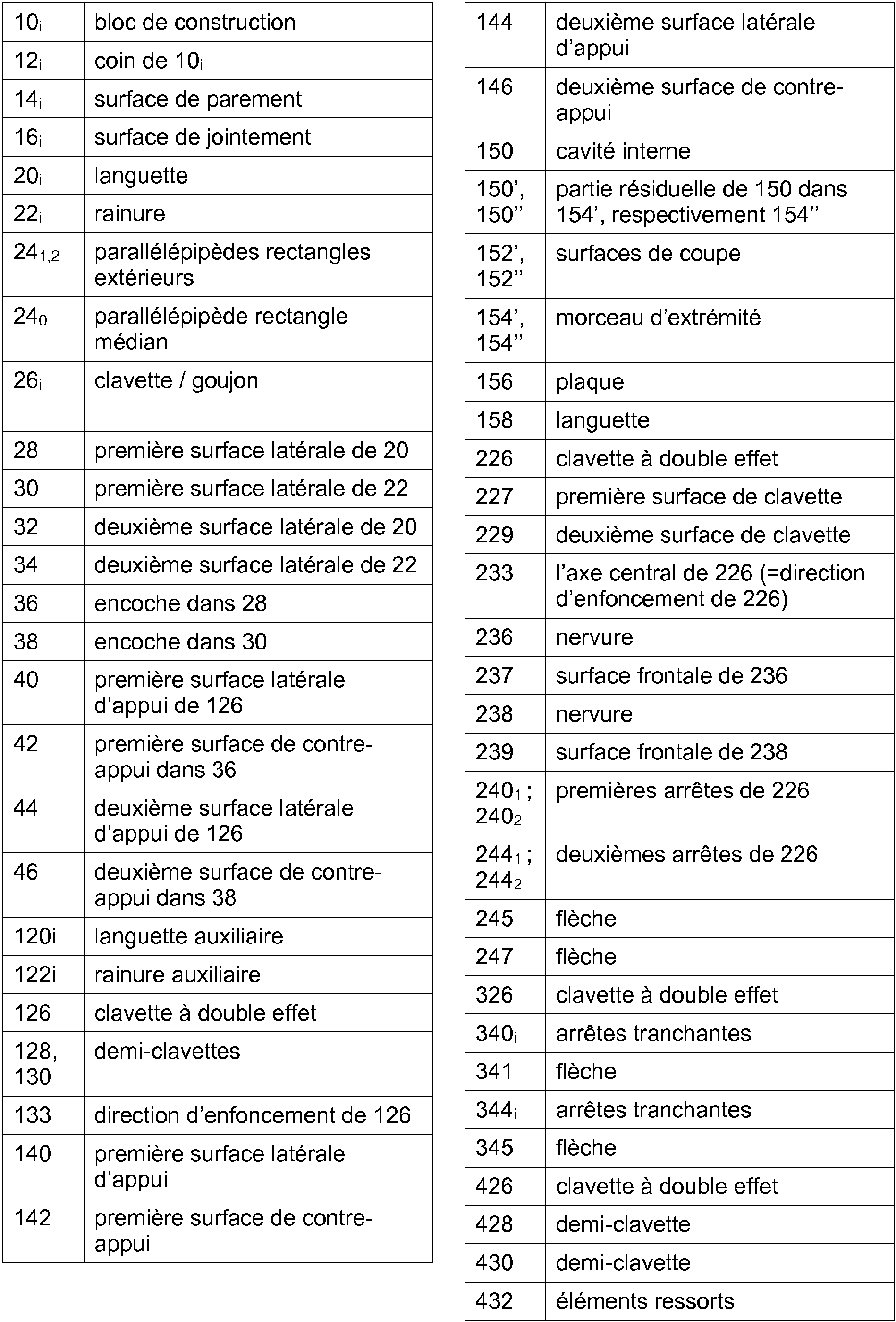

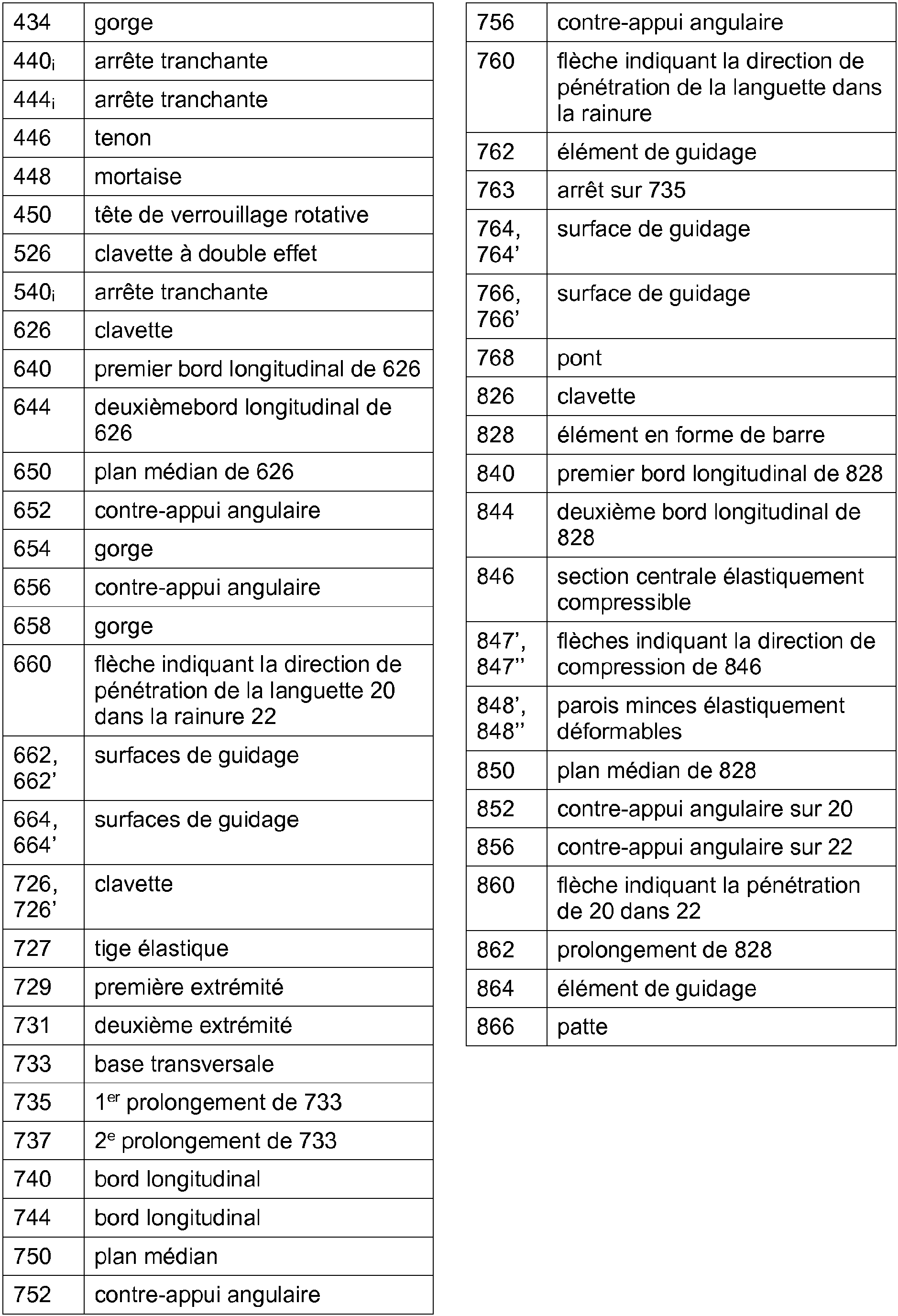

## Revendications

1. Système de construction pour murs, dalles et éléments porteurs, dans lequel un premier élément de construction a une surface de jointement (16i) équipée d'une languette (20i) et un deuxième élément de construction a une surface de jointement (16i) équipée d'une rainure (22i), la languette (20i) étant emboîtable avec jeu dans la rainure (22i), lorsque les deux éléments de construction sont assemblés pour former un joint au niveau desdites surfaces de jointement (16i), ledit système comprenant en outre : une clavette (26i) enfoncée entre une première surface latérale (28) de la languette (20i) et une première surface latérale (30) de la rainure (22i), qui fait face à ladite première surface latérale (28) de la languette (20i), dans lequel ladite clavette (26i) est conçue et agencée de façon à pousser ladite surface de jointement (16i) dudit premier élément de construction, en direction de la hauteur de la languette (20i), fermement contre ladite surface de jointement (16i) dudit deuxième élément de construction, dans lequel un élément de construction forme un bloc de construction (10i) en forme de parallélépipède rectangle avec quatre surfaces de jointement (16i), dont deux surfaces de jointement adjacentes sont équipées de languettes (20i) et deux surfaces de jointement adjacentes sont équipées de rainures (22i) ;
dans lequel le bloc de construction (10i) a un volume composé de deux parallélépipèdes rectangles extérieurs et d'un parallélépipède rectangle médian inséré entre les deux parallélépipèdes rectangles extérieurs, le parallélépipède rectangle médian dépassant sur deux surfaces de jointement (16i) adjacentes du bloc de construction pour former deux languettes (20i), et les deux parallélépipèdes rectangles extérieurs dépassant sur deux autres surfaces de jointement (16i) adjacentes du bloc de construction pour former entre elles deux rainures (22i).

2. Système selon la revendication 1, dans lequel une clavette (26i) enfoncée entre ladite première surface latérale (28) de la languette (20i) et ladite première surface latérale (30) de la rainure (22i), qui fait face à ladite première surface latérale (28) de la languette (20i), est conçue et agencée de façon à pousser une deuxième surface latérale (32) de la languette (20i) fermement contre une deuxième surface latérale (34) de la rainure (22i).

3. Système selon l'une quelconque des revendications 1 à 2, dans lequel :
l'épaisseur de la languette (20i) représente entre 10% et 40% de l'épaisseur du bloc de construction (10i) ; et/ou
le jeu latéral de la languette (20i) dans la rainure (22i), défini comme étant la différence entre la largeur de la rainure (22i) et l'épaisseur de la languette (20i), est entre 1 mm et 25 mm, préférentiellement entre 2 mm et 10 mm.

4. Système selon l'une quelconque des revendications 1 à 3, comprenant :
des clavettes (26i) agencées selon deux directions perpendiculaires.

5. Système selon l'une quelconque des revendications 1 à 4, dans lequel ladite première surface latérale (28) de la languette (20i) et ladite première surface latérale (30) de la rainure (22i) comprennent des encoches (36, 38) juxtaposées servant de logement à une clavette (26i).

6. Système selon l'une quelconque des revendications 1 à 5, comprenant une clavette (26i) à double effet qui est conçue et agencée de façon :
i) à pousser la languette (20i) avec une deuxième surface latérale (32) fermement contre une deuxième surface latérale (34) de la rainure (22i), qui fait face à ladite deuxième surface latérale (32) de la languette (20i) ; et
ii) à pousser la surface de jointement (16i) équipée de la languette (20i) fermement contre la surface de jointement (16i) équipée de la rainure (22i) dans laquelle ladite languette (20i) s'emboite ;
lors de l'enfoncement de la clavette (26i) double effet entre ladite première surface latérale (28) de la languette (20i) et ladite première surface latérale (30) de la rainure (22i).

7. Système selon la revendication 6, dans lequel la clavette (26i) à double effet comprend :
d'un côté latéral, une première surface latérale d'appui (40) prenant appui, en direction de la hauteur de la clavette (26i), sur une surface de contre-appui (42) sur ladite première surface latérale (28) de la languette (20i) ; et
de l'autre côté latéral, une deuxième surface latérale d'appui (44) prenant appui, en direction de la hauteur de la clavette (26i), sur une surface de contre-appui (46) associé à ladite première surface latérale (30) de la rainure (22i) ; et
ladite première surface latérale d'appui de la clavette (26i) et ladite deuxième surface latérale d'appui (40) de la clavette (26i) définissant entre elles un angle aigue, de façon à pousser la languette (20i) dans la rainure (22i), lors de l'enfoncement de la clavette (26i) entre ladite première surface latérale (28) de la languette (20i) et ladite première surface latérale (30) de la rainure (22i).

8. Système selon la revendication 7, dans lequel la clavette (26i) est composée de deux demi-clavettes (128, 130) sensiblement identiques agencées dos-à-dos avec un léger désaxage axial entre elles, de façon à ce qu'une des deux demi-clavettes forme la première surface latérale d'appui qui prend appui sur la surface de contre-appui sur ladite première surface latérale (28) de la languette (20i), et l'autre des deux demi-clavettes forme la deuxième surface latérale d'appui qui prend appui sur la surface de contre-appui sur ladite première surface latérale (30) de la rainure (22i), les deux demi-clavettes ayant préférablement un agencement en forme de « X »,
optionnellement, un ou plusieurs éléments élastiques sont agencés entre les deux demi-clavettes, ces éléments élastiques étant agencés de façon à écarter élastiquement les deux demi-clavettes.

9. Système selon l'une quelconque des revendications 7 à 8, dans lequel la surface de contre-appui (42) sur ladite première surface latérale (28) de la languette (20i), respectivement la surface de contre-appui (46) sur ladite première surface latérale (30) de la rainure (22i), est formée par un élément en saillie par rapport à ladite première surface latérale (28) de la languette (20i), respectivement par rapport à ladite première surface latérale (30) de la rainure (22i), ou
dans lequel la surface de contre-appui (42) sur ladite première surface latérale (28) de la languette (20i), respectivement la surface de contre-appui (46) sur ladite première surface latérale (30) de la rainure (22i), est formée par une encoche (36 ; 38) dans ladite première surface latérale (28) de la languette (20i), respectivement dans ladite première surface latérale (30) de la rainure (22i).

10. Système selon l'une quelconque des revendications 1 à 9, comprenant une clavette (26i) ayant :
un axe central (233) de clavette (226) définissant la direction d'enfoncement de la clavette ;
une première surface de clavette (227) faisant face à ladite première surface latérale (28) de la languette (20i) ;
une deuxième surface de clavette (229) faisant face à ladite première surface latérale (30) de la rainure (22i) ;
au moins une première arrête (240) faisant saillie par rapport à ladite première surface de clavette et définissant avec l'axe central de clavette un angle aigu ; et
au moins une deuxième arrête (244) faisant saillie par rapport à ladite deuxième surface de clavette et définissant avec l'axe central de clavette un angle aigu de signe opposé :
optionnellement, ladite première arrête faisant saillie par rapport à ladite première surface de clavette et ladite deuxième arrête faisant saillie par rapport à ladite deuxième surface de clavette sont des arrêtes tranchantes (340i, 344i) qui, lors de l'enfoncement de la clavette double effet entre ladite première surface latérale (28) de la languette (20i) et ladite première surface latérale (30) de la rainure (22i) s'incrustent dans ladite première surface latérale (28) de la languette (20i), respectivement dans ladite première surface latérale (30) de la rainure (22i).

11. Système selon l'une quelconque des revendications 1 à 8, comprenant une clavette (26i) ayant : :
un axe central de clavette définissant la direction d'enfoncement de la clavette ;
une première surface de clavette faisant face à ladite première surface latérale (28) de la languette (20i) ;
une deuxième surface de clavette faisant face à ladite première surface latérale (30) de la rainure (22i) ;
une paire de premières arrêtes parallèles faisant saillie par rapport à ladite première surface de clavette et définissant avec l'axe central de clavette un angle aigu ;
cette paire de premières arrêtes engageant une nervure faisant saillie de ladite première surface latérale (28) de la languette (20i) ; et
une paire de deuxièmes arrêtes parallèles faisant saillie par rapport à ladite deuxième surface de clavette et définissant avec l'axe central de clavette un angle aigu de signe opposé ;
cette paire de secondes arrêtes engageant une nervure (238) faisant saillie de ladite première surface latérale (30) de la rainure (22i).

12. Système selon l'une quelconque des revendications 10 à 11, dans lequel au moins certaines desdites arrêtes ont un profil en dents de scie.

13. Système selon l'une quelconque des revendications 1 à 7, dans lequel :
ladite clavette (26i) comprend une barre ayant une épaisseur, un premier bord longitudinal (640), un deuxième bord longitudinal (644) et un plan médian (650) qui divise la barre selon son épaisseur en deux, ladite barre étant optionnellement formée d'une rangée de tiges élastiques (727), ladite barre comprenant préférablement une section centrale élastiquement compressible, ladite section centrale élastiquement compressible étant optionnellement formée par un élément en forme de tube à parois minces élastiquement déformables, les parois minces élastiquement déformables étant optionnellement ajourées et/ou ayant optionnellement, en section transversale, sensiblement la forme d'une lettre « Ω », la partie convexe étant tournée vers l'extérieur ;
ladite première surface latérale (28) de la languette (20i) comprend un contre-appui angulaire (654) en retrait ou en saillie ;
ladite première surface latérale (30) de la rainure (22i) comprend un contre-appui angulaire (656) en retrait ou en saillie ;
ladite barre prend appui avec ledit premier bord longitudinal sur le contre-appui angulaire de ladite première surface latérale (28) de la languette (20i) et avec ledit deuxième bord latéral sur le contre-appui angulaire de ladite première surface latérale (30) de la rainure (22i) ; et
ladite barre est agencée de façon à ce que son plan médian définisse un angle aigu avec la direction de pénétration de la languette (20i) dans la rainure (22i).

14. Système selon la revendication 13, dans laquelle ladite clavette (26i) comprend :
une deuxième barre ayant une épaisseur, un premier bord longitudinal, un deuxième bord longitudinal et un plan médian qui divise la deuxième barre selon son épaisseur en deux ;
une deuxième surface latérale (32) de la languette (20i) comprend un contre-appui angulaire en retrait ou en saillie ;
une deuxième surface latérale (34) de la rainure (22i) comprend un contre-appui angulaire en retrait ou en saillie ;
ladite deuxième barre prend appui avec son premier bord longitudinal sur le contre-appui angulaire de ladite deuxième surface latérale (32) de la languette (20i) et avec son deuxième bord latéral sur le contre-appui angulaire de ladite deuxième surface latérale (34) de la rainure (22i) ; et
ladite deuxième barre est agencée de façon à ce que son plan médian définisse un angle aigu avec la direction de pénétration de la languette (20i) dans la rainure (22i) ;
optionnellement, ladite clavette (26i) avec ses deux barres est symétrique par rapport à un plan médian qui correspond au plan médian de la languette (20i).

15. Système selon l'une quelconque des revendications précédentes, dans lequel un élément de construction comprend au moins deux surfaces de jointement opposées dont l'une est équipée d'une languette (20i) et l'autre est équipée d'une rainure (22i), et une cavité centrale interne qui s'étend entre les deux surfaces de jointement opposées.

16. Système selon la revendication 14, dans lequel ledit élément de construction est divisé par une coupe transversale passant par ladite cavité centrale interne en deux morceaux, un premier morceaux portant la surface de jointement (16i) équipée de la languette (20i), et un deuxième morceaux portant la surface de jointement (16i) équipée de la rainure (22i), lesdits morceaux étant assemblés au niveau de ladite coupe transversale à l'aide d'une plaque ou d'au moins une barre, dont une extrémité est enfoncée dans la cavité centrale interne dudit premier morceau et une extrémité opposée est enfoncé dans la cavité centrale interne dudit deuxième morceau.

17. Un mur ou une cloison, construit avec le système selon l'une quelconque des revendications 1 à 3, comprenant des clavettes (26i) agencées selon une direction horizontale et des clavettes (26i) agencées selon une direction verticale.

18. Un mur, construit avec le système selon l'une quelconque des revendications 1 à 4, dans lequel toutes les clavettes (26i) sont agencées d'un seul côté de son plan médian.

## Patentansprüche

1. Konstruktionssystem für Wände, Platten und Tragelemente, wobei ein erstes Konstruktionselement eine Verbindungsoberfläche (16i) aufweist, die mit einer Feder (20i) ausgerüstet ist, und ein zweites Konstruktionselement eine Verbindungsoberfläche (16i) aufweist, die mit einer Nut (22i) ausgerüstet ist, wobei die Feder (20i) mit Spiel in die Nut (22i) eingefügt werden kann, wenn die zwei Konstruktionselemente montiert werden, um eine Verbindung im Bereich der Verbindungsoberflächen (16i) zu bilden, wobei das System ferner Folgendes beinhaltet: einen Keil (26i), der zwischen einer ersten seitlichen Oberfläche (28) der Feder (20i) und einer ersten seitlichen Oberfläche (30) der Nut (22i), die der ersten seitlichen Oberfläche (28) der Feder (20i) gegenüberliegt, eingepasst ist, wobei der Keil (26i) so ausgelegt und angeordnet ist, dass er die Verbindungsoberfläche (16i) des ersten Konstruktionselements in Richtung der Höhe der Feder (20i) fest gegen die Verbindungsoberfläche (16i) des zweiten Konstruktionselements drückt, wobei ein Konstruktionselement einen Konstruktionsblock (10i) in Form eines rechteckigen Parallelepipeds mit vier Verbindungsoberflächen (16i) bildet, bei dem zwei benachbarte Verbindungsoberflächen mit Federn (20i) ausgerüstet sind und zwei benachbarte Verbindungsoberflächen mit Nuten (22i) ausgerüstet sind; wobei der Konstruktionsblock (10i) ein Volumen aufweist, das aus zwei außenliegenden rechteckigen Parallelepipeden und einem mittleren rechteckigen Parallelepiped, das zwischen die zwei außenliegenden rechteckigen Parallelepipede eingefügt ist, besteht, wobei das mittlere rechteckige Parallelepiped an zwei benachbarten Verbindungsoberflächen (16i) des Konstruktionsblocks übersteht, um zwei Federn (20i) zu bilden, und die zwei außenliegenden rechteckigen Parallelepipede an zwei anderen benachbarten Verbindungsoberflächen (16i) des Konstruktionsblocks überstehen, um zwei Nuten (22i) zwischen sich zu bilden.

2. System nach Anspruch 1, wobei ein Keil (26i), der zwischen der ersten seitlichen Oberfläche (28) der Feder (20i) und der ersten seitlichen Oberfläche (30) der Nut (22i), die der ersten seitlichen Oberfläche (28) der Feder (20i) gegenüberliegt, eingepasst ist, so ausgelegt und angeordnet ist, dass er eine zweite seitliche Oberfläche (32) der Feder (20i) fest gegen eine zweite seitliche Oberfläche (34) der Nut (22i) drückt.

3. System nach einem der Ansprüche 1 bis 2, wobei: die Dicke der Feder (20i) zwischen 10 % und 40 % der Dicke des Konstruktionsblocks (10i) beträgt; und/oder das seitliche Spiel der Feder (20i) in der Nut (22i), das als Differenz zwischen der Breite der Nut (22i) und der Dicke der Feder (20i) definiert ist, zwischen 1 mm und 25 mm, vorzugsweise zwischen 2 mm und 10 mm beträgt.

4. System nach einem der Ansprüche 1 bis 3, beinhaltend:
Keile (26i), die gemäß zwei zueinander senkrechten Richtungen angeordnet sind.

5. System nach einem der Ansprüche 1 bis 4, wobei die erste seitliche Oberfläche (28) der Feder (20i) und die erste seitliche Oberfläche (30) der Nut (22i) nebeneinander liegende Aussparungen (36, 38) beinhalten, die einem Keil (26i) als Aufnahme dienen.

6. System nach einem der Ansprüche 1 bis 5, das einen doppeltwirkenden Keil (26i) beinhaltet, der zu Folgendem ausgelegt und angeordnet ist:
i) Drücken der Feder (20i) mit einer zweiten seitlichen Oberfläche (32) fest gegen eine zweite seitliche Oberfläche (34) der Nut (22i), die der zweiten seitlichen Oberfläche (32) der Feder (20i) gegenüberliegt; und
ii) Drücken der Verbindungsoberfläche (16i), die mit der Feder (20i) ausgerüstet ist, fest gegen die Verbindungsoberfläche (16i), die mit der Nut (22i), in die sich die Feder (20i) einfügt, ausgerüstet ist;
beim Einpassen des doppeltwirkenden Keils (26i) zwischen die erste seitliche Oberfläche (28) der Feder (20i) und die erste seitliche Oberfläche (30) der Nut (22i).

7. System nach Anspruch 6, wobei der doppeltwirkende Keil (26i) Folgendes beinhaltet:
auf einer seitlichen Seite, eine erste seitliche Anlageoberfläche (40), die in Richtung der Höhe des Keils (26i) an einer Gegenanlageoberfläche (42) an der ersten seitlichen Oberfläche (28) der Feder (20i) anliegt; und
auf der anderen seitlichen Seite, eine zweite seitliche Anlageoberfläche (44), die in Richtung der Höhe des Keils (26i) an einer Gegenanlageoberfläche (46) anliegt, die mit der ersten seitlichen Oberfläche (30) der Nut (22i) assoziiert ist; und
wobei die erste seitliche Anlageoberfläche des Keils (26i) und die zweite seitliche Anlageoberfläche (40) des Keils (26i) zwischen sich einen spitzen Winkel definieren, sodass die Feder (20i) beim Einpassen des Keils (26i) zwischen die erste seitliche Oberfläche (28) der Feder (20i) und die erste seitliche Oberfläche (30) der Nut (22i) in die Nut (22i) gedrückt wird.

8. System nach Anspruch 7, wobei der Keil (26i) aus zwei im Wesentlichen identischen Halbkeilen (128, 130) besteht, die Rückseite an Rückseite mit einem leichten axialen Achsversatz zueinander angeordnet sind, sodass einer der zwei Halbkeile die erste seitliche Anlageoberfläche bildet, die an der Gegenanlageoberfläche an der ersten seitlichen Oberfläche (28) der Feder (20i) anliegt, und der andere der zwei Halbkeile die zweite seitliche Anlageoberfläche bildet, die an der Gegenanlageoberfläche an der ersten seitlichen Oberfläche (30) der Nut (22i) anliegt, wobei die zwei Halbkeile vorzugsweise eine Anordnung in Form eines "X" aufweisen;
wobei optional ein oder mehrere elastische Elemente zwischen den zwei Halbkeilen angeordnet sind, wobei diese elastischen Elemente dazu angeordnet sind, die zwei Halbkeile elastisch auseinander zu drücken.

9. System nach einem der Ansprüche 7 bis 8, wobei die Gegenanlageoberfläche (42) an der ersten seitlichen Oberfläche (28) der Feder (20i) bzw. die Gegenanlageoberfläche (46) an der ersten seitlichen Oberfläche (30) der Nut (22i) durch ein Element gebildet werden, das in Bezug auf die erste seitliche Oberfläche (28) der Feder (20i) bzw. in Bezug auf die erste seitliche Oberfläche (30) der Nut (22i) vorsteht, oder
wobei die Gegenanlageoberfläche (42) an der ersten seitlichen Oberfläche (28) der Feder (20i) bzw. die Gegenanlageoberfläche (46) an der ersten seitlichen Oberfläche (30) der Nut (22i) durch eine Aussparung (36; 38) in der ersten seitlichen Oberfläche (28) der Feder (20i) bzw. in der ersten seitlichen Oberfläche (30) der Nut (22i) gebildet werden.

10. System nach einem der Ansprüche 1 bis 9, das einen Keil (26i) beinhaltet, der Folgendes aufweist:
eine Mittelachse (233) eines Keils (226), die die Einpassrichtung des Keils definiert;
eine erste Keiloberfläche (227), die der ersten seitlichen Oberfläche (28) der Feder (20i) gegenüberliegt;
eine zweite Keiloberfläche (229), die der ersten seitlichen Oberfläche (30) der Nut (22i) gegenüberliegt;
mindestens eine erste Kante (240), die in Bezug auf die erste Keiloberfläche vorsteht und mit der Keilmittelachse einen spitzen Winkel bildet; und
mindestens eine zweite Kante (244), die in Bezug auf die zweite Keiloberfläche vorsteht und mit der Keilmittelachse einen spitzen Winkel mit umgekehrtem Vorzeichen bildet:
wobei optional die erste Kante, die in Bezug auf die erste Keiloberfläche vorsteht, und die zweite Kante, die in Bezug auf die zweite Keiloberfläche vorsteht, scharfe Kanten (340i, 344i) sind, die sich beim Einpassen des doppeltwirkenden Keils zwischen die erste seitliche Oberfläche (28) der Feder (20i) und die erste seitliche Oberfläche (30) der Nut (22i) in die erste seitliche Oberfläche (28) der Feder (20i) bzw. in die erste seitliche Oberfläche (30) der Nut (22i) verkrallen.

11. System nach einem der Ansprüche 1 bis 8, das einen Keil (26i) beinhaltet, der Folgendes aufweist:
eine Keilmittelachse, die die Einpassrichtung des Keils definiert;
eine erste Keiloberfläche, die der ersten seitlichen Oberfläche (28) der Feder (20i) gegenüberliegt;
eine zweite Keiloberfläche, die der ersten seitlichen Oberfläche (30) der Nut (22i) gegenüberliegt;
ein Paar erster paralleler Kanten, das in Bezug auf die erste Keiloberfläche vorsteht und mit der Keilmittelachse einen spitzen Winkel bildet;
wobei dieses Paar erster Kanten in einen Steg eingreift, der von der ersten seitlichen Oberfläche (28) der Feder (20i) vorsteht; und
ein Paar zweiter paralleler Kanten, das in Bezug auf die zweite Keiloberfläche vorsteht und mit der Keilmittelachse einen spitzen Winkel mit umgekehrtem Vorzeichen bildet;
wobei dieses Paar zweiter Kanten in einen Steg (238) eingreift, der von der ersten seitlichen Oberfläche (30) der Nut (22i) vorsteht.

12. System nach einem der Ansprüche 10 bis 11, wobei mindestens einige dieser Kanten ein Sägezahnprofil aufweisen.

13. System nach einem der Ansprüche 1 bis 7, wobei:
der Keil (26i) einen Balken beinhaltet, der eine Dicke, einen ersten Längsrand (640), einen zweiten Längsrand (644) und eine Mittelebene (650), die den Balken seiner Dicke nach in zwei Teile teilt, aufweist, wobei der Balken optional aus einer Reihe von elastischen Stäben (727) gebildet ist, wobei der Balken vorzugsweise einen elastisch komprimierbaren Mittelabschnitt beinhaltet, wobei der elastisch komprimierbare Mittelabschnitt optional aus einem Element in Form eines Rohrs mit elastisch verformbaren dünnen Wänden gebildet ist, wobei die elastisch verformbaren dünnen Wände optional durchbrochen sind und/oder optional im Querschnitt im Wesentlichen die Form eines Buchstaben "Ω" aufweisen, wobei der konvexe Teil nach außen zeigt;
wobei die erste seitliche Oberfläche (28) der Feder (20i) eine zurückgesetzte oder vorstehende winkelförmige Gegenanlage (654) beinhaltet;
wobei die erste seitliche Oberfläche (30) der Nut (22i) eine zurückgesetzte oder vorstehende winkelförmige Gegenanlage (656) beinhaltet;
wobei der Balken mit dem ersten Längsrand an der winkelförmigen Gegenanlage der ersten seitlichen Oberfläche (28) der Feder (20i) und mit dem zweiten Längsrand an der winkelförmigen Gegenanlage der ersten seitlichen Oberfläche (30) der Nut (22i) anliegt; und
wobei der Balken so angeordnet ist, dass seine Mittelebene einen spitzen Winkel mit der Eindringrichtung der Feder (20i) in die Nut (22i) bildet.

14. System nach Anspruch 13, wobei der Keil (26i) Folgendes beinhaltet:
einen zweiten Balken, der eine Dicke, einen ersten Längsrand, einen zweiten Längsrand und eine Mittelebene, die den zweiten Balken seiner Dicke nach in zwei Teile teilt, aufweist;
wobei eine zweite seitliche Oberfläche (32) der Feder (20i) eine zurückgesetzte oder vorstehende winkelförmige Gegenanlage beinhaltet;
wobei eine zweite seitliche Oberfläche (34) der Nut (22i) eine zurückgesetzte oder vorstehende winkelförmige Gegenanlage beinhaltet;
wobei der zweite Balken mit seinem ersten Längsrand an der winkelförmigen Gegenanlage der zweiten seitlichen Oberfläche (32) der Feder (20i) und mit seinem zweiten Längsrand an der winkelförmigen Gegenanlage der zweiten seitlichen Oberfläche (34) der Nut (22i) anliegt; und
wobei der zweite Balken so angeordnet ist, dass seine Mittelebene einen spitzen Winkel mit der Eindringrichtung der Feder (20i) in die Nut (22i) bildet;
wobei optional der Keil (26i) mit seinen zwei Balken in Bezug auf eine Mittelebene, die der Mittelebene der Feder (20i) entspricht, symmetrisch ist.

15. System nach einem der vorhergehenden Ansprüche, wobei ein Konstruktionselement mindestens zwei entgegengesetzte Verbindungsoberflächen, von denen eine mit einer Feder (20i) ausgerüstet ist und die andere mit einer Nut (22i) ausgerüstet ist, und einen mittigen Innenhohlraum, der sich zwischen den zwei entgegengesetzten Verbindungsoberflächen erstreckt, beinhaltet.

16. System nach Anspruch 14, wobei das Konstruktionselement durch einen Querschnitt, der durch den mittigen Innenhohlraum verläuft, in zwei Stücke unterteilt wird, wobei ein erstes Stück die Verbindungsoberfläche (16i) trägt, die mit der Feder (20i) ausgerüstet ist, und ein zweites Stück die Verbindungsoberfläche (16i) trägt, die mit der Nut (22i) ausgerüstet ist, wobei die Stücke im Bereich des Querschnitts mit Hilfe einer Platte oder mindestens eines Balkens montiert werden, deren/dessen eines Ende in den mittigen Innenhohlraum des ersten Stücks eingepasst wird und deren/dessen entgegengesetztes Ende in den mittigen Innenhohlraum des zweiten Stücks eingepasst wird.

17. Wand oder Trennwand, die mit dem System nach einem der Ansprüche 1 bis 3 konstruiert ist, beinhaltend Keile (26i), die gemäß einer horizontalen Richtung angeordnet sind, und Keile (26i), die gemäß einer vertikalen Richtung angeordnet sind.

18. Wand, die mit dem System nach einem der Ansprüche 1 bis 4 konstruiert ist, wobei alle Keile (26i) auf einer einzigen Seite ihrer Mittelebene angeordnet sind.

## Claims

1. Construction system for walls, slabs and load-bearing elements, wherein a first construction element has a sealing surface (16i) equipped with a tongue (20i) and a second construction element has a sealing surface (16i) equipped with a groove (22i), the tongue (20i) being able to be slotted into the groove (22i) with play when the two construction elements are assembled to form a seal at said sealing surfaces (16i), said system further comprising: a spline (26i) inserted between a first lateral surface (28) of the tongue (20i) and a first lateral surface (30) of the groove (22i), which faces said first lateral surface (28) of the tongue (20i), wherein said spline (26i) is designed and arranged so as to push said sealing surface (16i) of said first construction element, in the direction of the height of the tongue (20i), firmly against said sealing surface (16i) of said second construction element, wherein a construction element forms a construction block (10i) in the form of a rectangular parallelepiped with four sealing surfaces (16i), of which two adjacent sealing surfaces are provided with tongues (20i), and two adjacent sealing surfaces are provided with grooves (22i) ;
wherein the construction block (10i) has a volume consisting of two outer rectangular parallelepipeds and one median rectangular parallelepiped inserted between the two outer rectangular parallelepipeds, the median rectangular parallelepiped standing proud on two adjacent sealing surfaces (16i) of the construction block to form two tongues (20i), and the two outer rectangular parallelepipeds standing proud on two other adjacent sealing surfaces (16i) of the construction block so as to form, between them, two grooves (22i).

2. System according to Claim 1, wherein a spline (26i) inserted between said first lateral surface (28) of the tongue (20i) and said first lateral surface (30) of the groove (22i), which faces said first lateral surface (28) of the tongue (20i), is designed and arranged so as to push a second lateral surface (32) of the tongue (20i) firmly against a second lateral surface (34) of the groove (22i).

3. System according to either one of Claims 1 and 2, wherein:
the thickness of the tongue (20i) represents between 10% and 40% of the thickness of the construction block (10i); and/or
the lateral play of the tongue (20i) in the groove (22i), defined as being the difference between the width of the groove (22i) and the thickness of the tongue (20i), is between 1 mm and 25 mm, preferably between 2 mm and 10 mm.

4. System according to any one of Claims 1 to 3, comprising:
splines (26i) arranged in two perpendicular directions.

5. System according to any one of Claims 1 to 4, wherein said first lateral surface (28) of the tongue (20i) and said first lateral surface (30) of the groove (22i) comprise juxtaposed notches (36, 38) serving to accommodate a spline (26i).

6. System according to any one of Claims 1 to 5, comprising a double-action spline (26i) which is designed and arranged so as to:
i) push the tongue (20i) with a second lateral surface (32) firmly against a second lateral surface (34) of the groove (22i), which faces said second lateral surface (32) of the tongue (20i); and
ii) push the sealing surface (16i) provided with the tongue (20i) firmly against the sealing surface (16i) provided with the groove (22i) into which said tongue (20i) slots;
when the double action spline (26i) is pushed between said first lateral surface (28) of the tongue (20i) and said first lateral surface (30) of the groove (22i) .

7. System according to Claim 6, wherein the double action spline (26i) comprises:
on one lateral side, a first lateral bearing surface (40) that bears, in the direction of the height of the spline (26i), on a bearing counterpart surface (42) on said first lateral surface (28) of the tongue (20i); and
on the other lateral side, a second lateral bearing surface (44) that bears, in the direction of the height of the spline (26i), on a bearing counterpart surface (46) associated with said first lateral surface (30) of the groove (22i); and
said first lateral bearing surface of the spline (26i) and said second lateral bearing surface (40) of the spline (26i) defining between them an acute angle, so as to push the tongue (20i) into the groove (22i), when the spline (26i) is inserted between said first lateral surface (28) of the tongue (20i) and said first lateral surface (30) of the groove (22i).

8. System according to Claim 7, wherein the spline (26i) consists of two half-splines (128, 130) that are substantially identical and are arranged back-to-back with a slight axial offset between them, in such a way that one of the two half-splines forms the first lateral bearing surface which bears against the bearing counterpart surface on said first lateral surface (28) of the tongue (20i), and the other of the two half-splines forms the second lateral bearing surface which bears against the bearing counterpart surface on said first lateral surface (30) of the groove (22i), the two half-splines preferably being arranged in the shape of an "X";
optionally, one or more elastic elements are arranged between the two half-splines, these elastic elements being arranged so as to elastically spread apart the two half-splines.

9. System according to either one of Claims 7 and 8, wherein the bearing counterpart surface (42) on said first lateral surface (28) of the tongue (20i), or respectively the bearing counterpart surface (46) on said first lateral surface (30) of the groove (22i), is formed by an element that projects with respect to said first lateral surface (28) of the tongue (20i), or respectively with respect to said first lateral surface (30) of the groove (22i), or
wherein the bearing counterpart surface (42) on said first lateral surface (28) of the tongue (20i), or respectively the bearing counterpart surface (46) on said first lateral surface (30) of the groove (22i), is formed by a notch (36; 38) in said first lateral surface (28) of the tongue (20i), or respectively in said first lateral surface (30) of the groove (22i).

10. System according to any one of Claims 1 to 9, comprising a spline (26i) having:
a central axis (233) of a spline (226) defining the direction of insertion of the spline;
a first spline surface (227) facing said first lateral surface (28) of the tongue (20i);
a second spline surface (229) facing said first lateral surface (30) of the groove (22i);
at least one first ridge (240) that projects with respect to said first spline surface and defines, with the central spline axis, an acute angle; and
at least one second ridge (244) that projects with respect to the second spline surface and defines,
with the central spline axis, an acute angle of opposite sign:
optionally, said first ridge that projects with respect to the first spline surface, and said second ridge that projects with respect to the second spline surface, are sharp ridges (340i, 344i) which, when the double action spline is inserted between said first lateral surface (28) of the tongue (20i) and said first lateral surface (30) of the groove (22i), become embedded in said first lateral surface (28) of the tongue (20i), or respectively in said first lateral surface (30) of the groove (22i).

11. System according to any one of Claims 1 to 8, comprising a spline (26i) having:
a central spline axis that defines the direction of insertion of the spline;
a first spline surface that faces said first lateral surface (28) of the tongue (20i);
a second spline surface that faces said first lateral surface (30) of the groove (22i);
a pair of first parallel ridges that project with respect to said first spline surface and define, with the central spline axis, an acute angle;
this pair of first ridges engaging with a rib that projects from said first lateral surface (28) of the tongue (20i); and
a pair of second parallel ridges that project with respect to said second spline surface and define, with the central spline axis, an acute angle of opposite sign;
this pair of second ridges engaging with a rib (238) that projects from said first lateral surface (30) of the groove (22i).

12. System according to either one of Claims 10 and 11, wherein at least some of said ridges have a saw tooth profile.

13. System according to any one of Claims 1 to 7, wherein:
said spline (26i) comprises a bar having a thickness, a first longitudinal edge (640), a second longitudinal edge (644) and a median plane (650) that divides the bar in two in the direction of its thickness, said bar optionally consisting of a row of elastic stems (727), said bar preferably comprising an elastically compressible central section, said elastically compressible central section being optionally formed by an element in the form of a tube having elastically deformable thin walls, the elastically deformable thin walls being optionally pierced and/or being optionally, in cross section, substantially in the shape of a letter "Ω", the convex part being oriented outwards;
said first lateral surface (28) of the tongue (20i) comprises an angled bearing counterpart (654) that is either set back or stands proud;
said first lateral surface (30) of the groove (22i) comprises an angled bearing counterpart (656) that is either set back or stands proud;
said bar bears with said first longitudinal edge on the angled bearing counterpart of said first lateral surface (28) of the tongue (20i) and with said second lateral edge on the angled bearing counterpart of said first lateral surface (30) of the groove (22i); and
said bar is arranged in such a way that its median plane defines an acute angle with the direction of penetration of the tongue (20i) in the groove (22i).

14. System according to Claim 13, wherein said spline (26i) comprises:
a second bar having a thickness, a first longitudinal edge, a second longitudinal edge and a median plane that divides the second bar in two in the direction of its thickness;
a second lateral surface (32) of the tongue (20i) comprises an angled bearing counterpart that is either set back or stands proud;
a second lateral surface (34) of the groove (22i) comprises an angled bearing counterpart that is either set back or stands proud;
said second bar bears with its first longitudinal edge on the angled bearing counterpart of said second lateral surface (32) of the tongue (20i) and with its second lateral edge on the angled bearing counterpart of said second lateral surface (34) of the groove (22i); and
said second bar is arranged in such a way that its median plane defines an acute angle with the direction of penetration of the tongue (20i) in the groove (22i);
optionally, said spline (26i) with its two bars is symmetric with respect to a median plane which corresponds to the median plane of the tongue (20i).

15. System according to any one of the preceding claims, wherein a construction element comprises at least two opposite sealing surfaces, of which one is provided with a tongue (20i) and the other is provided with a groove (22i), and a central internal cavity which extends between the two opposite sealing surfaces.

16. System according to Claim 14, wherein said construction element is divided into two pieces by a transverse cut passing through said central internal cavity, a first piece bearing the sealing surface (16i) provided with the tongue (20i), and a second piece bearing the sealing surface (16i) provided with a groove (22i), said pieces being joined at said transverse cut by means of a plate or at least a bar, of which one end is inserted into the central internal cavity of said first piece, and an opposite end is inserted into the central internal cavity of said second piece.

17. Wall or partition, constructed using the system according to any one of Claims 1 to 3, comprising splines (26i) that are arranged in a horizontal direction and splines (26i) that are arranged in a vertical direction.

18. Wall, constructed using the system according to any one of Claims 1 to 4, wherein all of the splines (26i) are arranged on just one side of its median plane.
